(19) Europäisches Patentamt
European Patent Office
Office européen des brevets

(11) Publication number: **0 253 138 B1**

# (12) EUROPEAN PATENT SPECIFICATION

(45) Date of publication of patent specification: **05.02.92**

(51) Int. Cl.$^5$: **G06F 15/02**, G06F 15/21

(21) Application number: **87108562.7**

(22) Date of filing: **13.06.87**

## (54) Data processing device.

(30) Priority: **17.06.86 JP 142587/86**
**31.07.86 JP 181701/86**
**31.07.86 JP 181702/86**
**31.07.86 JP 181703/86**
**31.07.86 JP 181704/86**

(43) Date of publication of application:
**20.01.88 Bulletin 88/03**

(45) Publication of the grant of the patent:
**05.02.92 Bulletin 92/06**

(84) Designated Contracting States:
**DE FR GB**

(56) References cited:
**US-A- 4 117 542**

(73) Proprietor: **SHARP KABUSHIKI KAISHA**
**22-22 Nagaike-cho Abeno-ku**
**Osaka 545(JP)**

(72) Inventor: **Kawai, Shoichi**
**1-23-12, Sangenyanishi Taisho-ku**
**Osaka-shi Osaka(JP)**

(74) Representative: **Selting, Günther, Dipl.-Ing. et al**
**Deichmannhaus am Hauptbahnhof**
**W-5000 Köln 1(DE)**

EP 0 253 138 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a data processing device, and more particularly to a data processing device which is suitable for a handy type electronic computer to process various tables.

In order to process or calculate various tables, such as a list of student's record of examinations of various subjects, conventionally there has been employed a relatively large computer with a display unit having a large display capacity enough to display entire contents of the table in a matrix shape having predetermined number of lines and rows with the title of the table, name of the line item and name of the row item, whereby it has been easy to read the respective elements of the table by the operator.

On the other hand, in small sized computers such as pocket type computer or handy type computer, the available display capacity of the display unit provided in the handy type computer is too small for examples only one or several lines to display the entire elements of the table. Therefore, in attempting to process the table for example, the student's record using the conventional handy type computer, since only one line of the table can be displayed, the operator must scrol every line of the table on the display unit. However, according to this way, the operator can read only numeric data of the table without any identifications such as title of the table (in this example, student's record of examination) and table item name (in this case the name of students, subjects of the examinations), the operator can scarcely obtain the necessary information of the table.

A known electronic pocket directory (US-A-4,117,542) comprises a case containing a RAM circuit for programming operation of the instrument and a read/write circuit dedicated to storing and retrieving telephone numbers, street addresses, appointments and agenda. The key board on this case comprises alphanumeric keys for numerals and letters together with function keys for inputting and fetching the stored information. The information is retrieved visually by means of an alphanumeric display. The known electronic pocket directory discloses only an electronic telephone address book, in which data may be stored under a certain name item. The operator can read only the data of the table according to the item name.

It is the object of the present invention as set forth in claim 1 to provide a data processing device in which data may be read out from matrix shaped tables together with identifications such as title of the table and table item name with a small display capacity.

Fig. 1 is a top plan view of an example of a handy type computer in which a data processing device according to the present invention is incorporated,

Fig. 2 is a block diagram showing an example of the data processing device according to the present invention,

Fig. 3 is a schematic diagram showing an example of the memory map of a memory device used in the data processing device according to the present invention,

Figs. 4A to 4C are flow charts showing an example of the data processing device according to the present invention,

Fig. 5 is a top plan view of another example of a handy type computer in which a data processing device according to the present invention is incorporated,

Fig. 6 is a block diagram showing an example of the data processing device according to the present invention,

Figs. 7A and 7B are flow charts showing an operation of the data processing device shown in Fig. 5 and Fig. 6,

Figs. 8, 9A and 9B, 10, 11 and 12 are flow charts showing various modifications of the data processing device according to the present invention, and

Figs. 13 and 14 are flow charts showing an example of control of displaying the data in the data processing device according to the present invention.

Referring to Fig. 1 showing an appearance of a handy type computer l or pocket computer according to the present invention, there are provided a display unit 2 made of LCD (liquid crystal display device) in an upper portion of the computer l and a key board having various character input keys and function keys in peripheral portions of the display unit 2. The display unit 2 is a dot segment type of one line 24 digits for displaying numeric characters alphabets, kanas, chinese characters and various functional symbols such as +, -, X or the like. The display unit 2 includes indicators 2l, 22, 23 and 24 at the lower portion of the display unit for displaying various operation modes of the computer l.

The functions of the keys provided in the computer l will be described hereinafter.

l0 denotes a power switch. When the power switch l0 is turned on, the power can be supplied to necessary portions of a circuit arrangement of the computer l and the computer l is initialized and set in a statistical operation mode (STAT).

II denotes mode setting key unit consisting of a STAT key IIA for alternately setting the computer I in the statistical operation mode (STAT) and a calculation mode (CAL) every operation of the STAT key IIA and a BASIC key IIB for setting the computer I in a processing mode using BASIC language in addition to an operation of switching between a RUN mode which the computer I executes the program and a programming mode (PRO) alternately every operation of the BASIC key IIB.

During the STAT mode, the indicator STAT 2I is turned on and during the CAL mode, the indicator CAL 22 is turned on. Similarly, during the RUN mode, the indicator RUN 23 is turned on and during the PRO mode, the indicator PRO 24 is turned on.

I2 denotes character keys each of which can also operates as function keys.

I3 denotes a numeric key group and a calculation instructing key group.

Key 28 which is originally a - key is assigned as a data absent key when a shift key is operated for informing of absent of the data of the any items of the table in the statistical operation.

I4 denotes a function key group for calculating deviation value and average value in the statistical operation mode (STAT).

I5A, I5B, I5C and I5D denote cursor keys.

25 denotes a list key for instructing to prepare and read out one or more desired list of data of the table for the purpose of the statistical processing and 26 denotes a line input key for selecting one of the items in a direction of the line of the table at the time of preparing the list, 27 a row input key for selecting one of the items in a direction of the row of the table.

Fig. 2 shows a circuit diagram of the computer I according to the present invention.

40 denotes a central processing unit (referred to as CPU) for executing data processing according to the control program stored in a ROM (read only memory) 45 which is coupled with the CPU I through path lines.

The display unit 2 is driven by a display control unit 42 (abbreviated as DCU in Fig. 2) coupled with the CPU 40. The display control unit 42 comprises a display buffer 43 for storing the dot data of the information to be displayed on the display unit 2.

44 denotes the key board mentioned above, which provides coded signals representing the operated keys to the CPU 40.

ROM 45 comprises a first area for storing the initial program, second area for storing the interpreter of the BASIC language, a third area for storing the program for the statistical processing the detail of which will be mentioned later, a fourth area 454 acting as a character generator which generates coded signals of the dot pattern in response to the code information of the characters and symbols prepared in the CPU 40 and a fifth area 456 for storing various system programs. Preferably, the respective areas 45I to 456 of the ROM 45 may be formed by independent ROM chips.

RAM 46 is coupled to the CPU 40 through bus lines and comprising a first area 46I for storing one or more user programs written by a user of the computer I in BASIC language, a second area 462 for storing contents of tables prepared by the statistical processing according to the present invention and a third area 463 or system area containing various buffers and counters or the like.

The system area 463 comprises counters named h counter, m counter and n counter, C, M, N, A and B registers.

The second area 462 is assigned as variables data (data of the variables of the table) area of the BASIC as shown in Fig. 3. The data shown in Fig. 3 may be stored in the second area 462 at the time of every data entry process or according to the order of assignment of the variables data contained in BASIC program, whereby the table can be prepared.

The table I represents an example of a table used in the present invention and Fig. 3 shows how the data corresponding to the table I are stored in the second area 462. In Fig. 3, each item of the table is defined by I6 bit fixed length. Reference numeral 30 in Fig. 3 denotes the name of variables of the row item in the table I. As shown in Fig. 3, the number of the items (in fact, the number of item + I) is also stored with the name of the variables. The title data is stored in areas 3I.

The title of the table I is stored in an area 32.

The name of the variables of items in the respective lines of the table I is stored in area 33 with the number of the items in the lines. Each title data is stored in areas 34.

The name of the variables of the data is stored in the area 35 with the number of items M and N and the data thereof are stored in areas 36.

The respective item data are stored in the RAM 46 at the time of every operation of entering the item data or according to the order of variables of BASIC language. For the purpose of reading out the item data, each of the item data may be accessed by an address value representing the position of the item data which is calculated based on the number of the item stored with the name of the item.

The way of assigning the respective areas in the RAM has been known to public by the Japanese patent laid open (unexamined) 43246/l982. The reference numeral 38 denotes a non entered data representing a fact that no data is entered and the non entered data is expressed by a minimum value with a negative symbol. When the name of the area 35 of the variables is assigned, all of the item data areas corresponding to the variables are written by the non entered data.

Reference numeral 39 denotes an absent data which represents a fact that data is absent in the corresponding portion of the table I. The absent data is expressed by a maximum value with a plus symbol, which is stored when the data absent key 34 is made on.

In the present embodiment, the maximum value and minimum value are used as the non entered data and absent data so as to facilitate to use various code systems without limitation from the view point that the computer employs the BASIC language. Besides, in the actual data processing it can be expected that the maximum value and minimum value scarcely occur.

TABLE 1

| row / line | T1 Math. | T2 English | T3 Science | T4 Japanese |
|---|---|---|---|---|
| Y1 Aoki | 30 (P1) | 80 (P2) | 45 (P3) | 93 (P4) |
| Y2 Kato | 85 | 63 | 47 | 39 |
| Y3 Saito Kenichi | 37 (P9) | 43 | 76 | 68 |
| Y4 Takai | 49 | 83 | 93 | 46 |
| Y5 Yokota | 34 | 29 | 47 | 39(P20) |

The operation of the computer mentioned above will be explained hereinafter.

In order to store the various data shown in the table I in the memory area 462, the operator pushes the table key 3l shown in Fig. l first, then the title of the table is entered by the character keys l2. The title data is stored in the table data area.

Subsequently, the input key 27 is operated to instruct to input the row items, in turn the respective row item data 3l such as Mathematics (expressed as Math. in the table I) English and so on are entered by the character keys l2 so as to store them in the memory areas of the RAM 46. Moreover, the input key 27 is operated to instruct to input the line items, in turn the respective line item data 34 such as the names of students Aoki, Kato and so on are entered by the character keys l2 to store them in the memory area of the RAM 46.

By repeating the operations mentioned above, the row and line title data are stored. Upon pushing the input key 26 again, the subsequent title of the line item can be entered. However, when the line is unnecessary, the second operation of a consecutive two time operation of the input key 26 acts as the instruction of the entry of the numeric data. Thus, upon operation of the cursor keys l5A to l5D, the desired numeric data areas 36 are selected and the numeric data based on the table I can be inputted by the numeric keys l3. It is noted that all of the numeric data areas are filled with the non entered data, which is updated by the numeric data entered by the above mentioned numeric key operation. Accordingly, in case no numeric data is entered, the non entered data in the respective memory areas remain unchanged.

The statistical operation mode (STAT) is explained hereinafter with an assumption that the table data based on the table I are stored in the RAM 46 in a manner as shown in Fig. 3.

In order to confirm the respective item data stored in the RAM 46, the table key 25 is operated, so that the steps after Sll in Fig. 4A are executed.

In the steps Sll to Sl3, an h counter the contents of which represent the name of the variables of the table, m and n counters representing the respective item area positions are reset, the area 30 of the variables Th$ or T0$ is taken in based on the content of the h counter and the number of the items (number of the row items) (c) is taken in a C register.

The item data of Th$ (4) 32 or Th$(C-l) is taken in and character data representing "a list of the student's record" are decoded in the form of dot pattern in the CG area 454 of the ROM 45 and the decoded character data are transferred to the display buffer 43, then the characters mentioned above are displayed in the display unit 2 through the steps Sl4 and Sl5.

Subsequently, the variables areas Dh$ or D0$ are taken in and the line item number (L) is transferred to an L register and the Dh or D0 variables name area 35 is taken in, so that the number of items (M,N) are transferred to the M and N register in the steps Sl6 to Sl9.

In case of accessing another table data, the content of the h counter is increased by l by operating the table key 25. Operation of the cursor keys l5A to l5D causes the program to go to the step S30 shown in Fig. 4B.

It should be noted that the data h (herein 0) for discriminating the table data and row item number are stored in the C register and the data item number is M and N registers.

Referring to Fig. 4B, upon operation of the cursor right shift key l5A, the program after the step S3l is performed and upon operation of the cursor left shift key l5B, the program after the step S35 is performed. Upon operation of the cursor up shift key l5C, the program after the step S50 is performed and upon operation of the cursor down shift key l5D, the program after the step S56 is performed. In a period of displaying the table title, the contents of the m counter and n counter are both zero Under such a situation, when the cursor right shift key l5A is operated, the m counter is increased by l, the row item data 3l represented by Th$(m-l) is read out, the character strings "row items = item data" are fed to the display unit 42 and displayed therein.

The operation mentioned above are repeated every time the cursor right shift key l5A is operated, each of the row item areas 3l is taken in in a right direction in Fig. 3 and they are displayed through the steps S3l to S33 and S40 and S4l.

When the content m of the m counter reaches m = C-l due to the repetitive operation of the cursor right shift key l5A, that is when the rightmost row item of the table l is displayed, the m counter is reset to make the contents of the m counter and n counter 0, the item area 32 is taken out so as to display "table title = item data (list of the student's record)" through the steps S3l to S34 and S42 and S43.

When the cursor left shift key l5B is operated, the content of the m counter is made m-l according to the step after S35. The contents of the row items areas 3l are read out in a left direction (in the left direction in the top part of the table l) every time the cursor left shift key l5B is operated, and they are displayed in the display unit 42 through the steps S35 to S38 and S40 and S4l.

When the cursor left shift key l5B is operated under m = l, Th$(C-l) that is the item data of the table item area 32 is taken in, so that "title of the table = item data (list of the student's record) are displayed.

When the cursor left shift key l5B is operated under m = 0, the name of the row item of the right end is displayed through the steps S35 to S37 and S40 and S4l or S35 to S38 and S42 and S43.

On the other hand, when the cursor up shift key l5C is operated, the program after the step S50 is performed and the content of the n counter is increased by l under m = 0 and Dh$(n-l) that is the respective line item data 34 are displayed every time the cursor up shift key l5C is operated, whereby "line items = item data (Aoki, Kato, and so on) are displayed.

According to the operation mentioned above, the data are read from the area on which the reference numeral 34 is described to the right (downward in the left end portion of the table l) in the steps S50 to S54.

In case the displayed line item area is final, (the lowest line in the table l), the n counter is reset and the steps S42 and S43 are performed through the steps S50 to S55).

When the cursor down shift key l5D is operated, the line item data are sequentially displayed in the reversed direction mentioned above through the steps S56 to S60.

As mentioned above, when the cursor right shift key l5A or cursor left shift key l5B is operated in the condition of m = 0, each row item of the table l are sequentially displayed circling in the right direction or left direction in the table l.

When the cursor up shift key l5C or cursor down shift key l5d are operated in the condition of m = 0, each line item shown in the table l is sequentially displayed circling in the upward direction or downward direction. When the m = 0 and n = o, the name of the title of the table is displayed.

In the operation mentioned above, when any of the cursor right shift key l5A or cursor left shift key l5B is operated in the condition of n ≠0 or any of the cursor up shift key l5C or cursor down shift key l5d is operated in the condition of m ≠0, the operation goes to the data item area display as shown in Fig. 4C.

It is judged in the step S70 whether or not m = H or the rightmost item in the data item area is now displayed. In case m does not reach H, m counter is added by l, Th$(m-l) item data that is, any area in the row items 3l is selected and the selected data is transferred to the B register. If m = l, the row item area 3l in T0$ shown in Fig. 3 is taken in in the steps S70, S74 and S75.

Subsequently, the item data Dh$(n-l) is stored in the A register. Assuming n = l, the D0$(0) line item "Aoki" is taken in in the step S76.

It is judged in the step S77 whether the sum of the number of character in the A register and the number of the character in the B register is smaller than or equal to a predetermined value ℓ , for example l3. In case the sum is greater than ℓ, the contents of the A register and B register are compared in the step S78. The trailing one character in the character strings of any one of the register string the greater number of the characters is deleted in any one of the steps S79 or S80. This operation is repeated until the sum of the number of characters stored in the A registers and B registers (abbreviated as A + B hereinafter) becomes equal or smaller than the value ℓ. When A + B ≦ ℓ, the numeric data is taken from the data item area 36 based on the contents of the m counter and n counter and the name of the line item which is stored in the A register and name of the row item which is stored in the B register, the numbers of both characters being adjusted as mentioned above, are displayed in the display unit 2 with the numeric data in the steps S8l and S82.

For example, if the contents of the m counter and n counter equal l, the character strings of the line item and row item "Aoki : Mathematics = 70" is displayed.

The process shown in the steps S77 to S80 enables to display the line item and row item on one line of the display unit 2 eliminating a part of the line item and row item so that the sum of the character strings of the row item and line item becomes within the predetermined value ℓ because there is a limit of the number of the characters displayable in the one line display unit 2.

Every time the cursor right shift key l5A and cursor left shift key l5B are operated, the data of the line item and row item of a predetermined line in the table l, which line is determined by the content of the n counter, can be displayed in the display unit 2 shifting in the right or left direction. In case the cursor right shift key l5A is pressed displaying from the right end item in the table l or the cursor left shift key l5B is pressed displaying the left end item in the table l, only the name of the line item can be displayed as shown in Fig. 4(B) (S73).

Every time the cursor up shift key l5C and cursor down shift key l5d are operated, the data of the line item and row item of a predetermined row in the table l, which row is determined by the content of the m counter, can be displayed in the display unit 2 scrolling in the upward or downward direction. In case the cursor up shift key l5C is pressed displaying from the lowermost item in the table l or the cursor down shift key l5d is pressed displaying the uppermost item in the table l, only the name of the row item can be displayed as shown in Fig. 4B (S90).

As mentioned above, since the name of the line item and name of the row item are simultaneously displayed, the stored data can be easily confirmed with a small line number display unit.

The various features of the display in the embodiment mentioned above are summerized hereinafter with reference to the table l.

When the position Pl in the table l is indicated on the display area,

"Aoki : Mathematics = 30" is displayed.

When the position P2 in the table l is indicated,

"Aoki ; English = 80" is displayed.

When the position P20 in the table l is indicated,

"Yokota : Japanese = 39" is displayed.

As mentioned above, the name of the line item, name of the row item are displayed with the numeric and character data corresponding to the indicated names of the line and row items sequentially. Therefore, it can be easily understood what position and what data in the table are now displayed.

When the position P9 in the table l is indicated, there is displayed "Saito Ken : Mathematics = 37". In this case, the sum of the number of the character strings of the names of the line item and row items is limited in a predetermined value, and the characters exceeding the limit are eliminated from the display.

Referring to Figs. 5 to ll showing another embodiment of the present invention, the computer of the keyboard shown in Fig, 5 comprises an interchange key l2l to instruct to generate a data matrix having a data array corresponding to a transpose of a data matrix.

With reference to Fig. 6, the RAM 46 comprises a table area 464 for storing the respective table data and a system area 465 containing an h counter 466 for representing parameters corresponding to the respective table titles used for discriminating the respective tables, an m counter 467 representing parameter for discriminating each line of the table and an n counter 468 representing parameter for discriminating each row of the table. RAM 46 further contains an F register to store an assembly of flags representing completion of transpose of the data of the lines and rows of each matrix (the flag is referred to as transpose completion flag), X register acting as a working area for performing the transpose of the matrix and miscellaneous C, M, N, A and B registers.

TABLE 2

| | T1 | T2 | T3 |
|---|---|---|---|
| | Math. | English | Science |
| Y1 Aoki | 63 | 82 | 73 |
| Y2 Kato | 49 | 35 | 94 |
| Y3 Saito | 75 | 63 | 83 |
| Y4 Tiba | 93 | 46 | 63 |
| Y5 Numata | 24 | 35 | 42 |
| Y6 Hayasi | 38 | 79 | 56 |

In the table area 464 of the RAM 46, there is set a definition area 200 (see Fig. 3) in which character string function Th$ (C) of every table title and every row item name and row item number (actually row item number plus 1) are assigned from the leading address.

There are defined row item name area 201 to 205 in the table area 464 wherein the respective row item names shown in the table 2 are stored in such a manner as

T0 $ (0) = "mathematics"      (l)

using the count value C of the C register as a parameter.

Subsequently, another definition area 2l0 is set so as to store the string function Dh$ (L) assigned for the line item names. Then the line item areas 2ll, 2l2, 2l3 are set using the count value L as a parameter, so that the line item name

D0$ (0) = Aoki      (2)

for example, can be stored.

Subsequently, there is set a further definition area 2l4 which is defined for the numeric value function Dh (m,n) assigned to the input data corresponding to the points of the students in the table 2, then the data storage areas 2l5, 2l6, and the input data are stored in such a manner as

D0 (0,0) = 30      (3)

These data are automatically assigned in the table area 464 in every input process. They can also be assigned according to the variables order of the BASIC language. The data can be accessed by calculating the address value of the data according to the item number stored in the definition areas 200, 220, 2l0...and so on along with the name of variables.

Stored in the table data area 464 are such data that are assigned in the area presumed by the maximum length L0 in the row direction of the table which is defined in the definition area 2l0 and the maximum length C0 in the line direction when no data is inputted to computer l. All of the data mentioned above are stored in the table data area 464.

The procedure for inputting the various data to make the desired table will be explained with reference to Figs. 7A and 7B. In the step al, the table key 25 is operated then the h counter for storing the number of each table is reset to 0 in the step a2. Subsequently, the CPU 40 acts to store the data representing

"table title" ;h+l ; "= ?"

in the display buffer 43 in the step a3, displaying the data in the display unit 2.

Key input data entered by the operation of the keys in the key board are read in the step a4. It is judged in the step a5 whether or not the operated key belongs to the character input key group l2 such as alphabet and kana. In case the judgment is no, the program goes to the step a6. In case the judgment is "yes", the program goes to the step a7 to take in the entered character code in the key input buffer 47 and the character code is decoded to a character pattern code using the CG area 454 and the decoded character pattern code is fed to the display control unit 42 thereby to display the character in the display unit 2 in the step a8. Thereafter, the program goes to the step a4, repeating the operation of a4 to a8. By the operation mentioned above, the entered table title such as "student's record" is stored in the key input buffer 47 and the table title can be displayed in the display unit 2. In case the judgment is "no" in the step a5, the program goes to the step a6 wherein it is judged whether or not the operated key is the row input key 27. In case the judgment is "no". the program goes to the step a9. In case of "yes", the program goes to the step al0 in which the content of the key input buffer 47 stored in the step a7 is stored in the area of the string function Th$(C). On the other hand, it is judged in the step a9 whether or not the table key 25 is operated. In case the judgment in the step a9 is "no", the program goes to the step a3. In case the judgment in the step a9 is yes, the program goes to the step all to judge whether or not the count value h of the h counter is a predetermined value T for example 9. The predetermined value T represents the maximum available number of the tables in the computer l. In the example mentioned above, nine tables can be stored in the computer l. The value T may be more or less than 9.

In case the judgment in the step all is no, which means that one or more tables can be entered in the computer l, the program goes to the step al2 in which the content of the h counter is increased by l then the program goes to the step a3. In case the judgment is yes in the step a ll, which means that a further table can not be entered, the program goes to the step al3 to make the content of the h counter "0", then the program goes to the step a3 to display the title of the first table.

Following to the step al0 is the step al4 to enter the line item name. In the step al4, the content C of the C register which represents the row item number is initialized by 0. The row item name is displayed in the step al5 in the same manner as the format of the table title in the step a3. Subsequently, the data inputted by the keyboard 44 is read in in the step al6.

In the step al7, it is judged whether or not the character key is operated. With the judgment "no", the program goes to the step al8, on the other hand, with the judgment "yes", the program goes to the step a20 wherein the inputted character key code is stored in the key input buffer 47 in the same manner as mentioned in the steps a7 and a8, thereby displaying the characters in the display unit 2, then the program goes to the step al6.

With the judgment "no" in the step al7, it is judged in the step al8 whether or not the row input key 27 is operated. In case the judgment is no, the program goes to the step al6 to repeat the operation mentioned above. In case the judgment is yes, it is judged in the step a20 whether or not the content of the key input buffer 47 is empty. In case the judgment is no, the program goes to the step a22, then the content of the string function Th$(C) is written in the string function Th$(C+l). Thereafter, in the step a23, the present content of the key input buffer 47 is assigned and stored in the string function Th$(C). Thereafter, the content C of the C register is increased by l in the step a24 and the program goes to the step al5.

Summing up the processes in the steps a22 to a24, every time when the row item name is entered, each table title stored in the string function areas is sequentially transferred in such a direction that the address of the string function areas increases and the newest input row item name is assigned to the string function area Th$(0) corresponding to the content C = 0 in the C register.

In case the row input key 27 is operated without operation of any character keys, the judgment in the step a2l is yes, this shows that the data input operation of the table presently being made has been completed. Subsequently, the program goes to the steps to enter the line item name shown in Fig. 8.

In the step bl, the C register is initialized to 0, then the program goes to the step b2 to display the character strings "line item " ; L ;" = ?" in the display unit 2.

The key information inputted are read in the step b3. Subsequently, it is judged in the step b4 whether or not any character key is operated. In case the judgment in the step b4 is no, the program goes to the step b5 in which it is judged whether or not the line input key 26 is operated. In case neither the character key l2 nor the line input key 26 is operated, the program goes to the step b3. In case the judgment is yes in the step b4, the program goes to the steps b6 and b7 wherein the input character key information is stored in the key input buffer 47 and displayed in the display unit 2.

In case the input of the characters of the line item name of one line is completed, the results of the judgment in the steps b4 and b5 are no and yes, then the program goes to the step b8, wherein it is judged whether or not the content in the key input buffer 47 is 0. In case the judgment is yes, which means completion of the line item name, the program goes to the process shown in Fig. 9A and 9B. In case the judgment in the step b8 is no, the program goes to the step b9, the data in the key input buffer 47 is stored in the string function Dh$(L), then the count value (L) is increased by l in the step bl0. Thereafter the program goes to the step b2 so as to inquire whether or not there is a further input of the character of the line item name by the display unit 2. In case the input of the line item name is completed, the operator pushes the line input key 26 again, the program goes to the step b8 through the steps b4 and b5 and it is detected that the content of the key input buffer 47 is empty in the step b8, so that the program goes to the process shown in Figs. 9(a) and 9(b) for processing the input numeric data of the content of the table such as the points of the students in the table l. In the step dl, the content of the m counter which represents the position in the table in the row direction and the further content of the n counter which represents the position in the table in the line direction are respectively initialized to 0. Also the content of the h counter which stores the table number is initialized to 0.

In the step d2, the memory capacity of L0 × C0 is preliminarily assigned for the numeric function Dh$ (m,n). In the above, L0 means the maximum number of the data in the table in the line direction and C0 means the maximum number of the data in the table in the row direction, storing the non entered number in the respective memory areas.

There is displayed the following content representing the string functions Th$(C) and Dh$(L) of the row item name and line item name in the display unit 2 in the step d3

Dh$(m);Th$(n);" = ?"      (A).

Subsequently, the key input is read in in the step d4.

The steps d5, d6, and d7 are provided for for discriminating that the entered characters are coming form the numeric key group l3, interchanging key l2l or row input key 27. With the judgment "yes" in the step d5, the inputted numeric data is stored in the input buffer 47 and is displayed in the display unit 2 in the step d9. When the input of the numeric data is completed, the inputted numeric characters such as 69 are displayed in the first line and first row of the table display unit 2.

With the judgments "no" in the step d5 and "yes" in the step d6, the program goes to the step dl0 to perform a matrix transposing process which will be explained later. When the input of the data of one row is completed and there is an inquiry of the subsequent row, the judgment in the step d6 is "no" and is "yes" in the step d7, the program goes to the step dll to transfer the content of the key input buffer to the data function Dh$ (m,n) (now m and n are 0). Subsequently, it is judged in the step dl2 whether or not the number of the rows which are filled with the input data becomes the maximum row number C0. When the data have not been filled up to the maximum row, the judgment in the step dl2 is "no" and the program goes to the step dl3 to increase the content of the row number in the n counter by l and returns to the step d3.

In case the data has been filled up to the maximum row, the judgment in the step dl2 is made "yes" and the program goes to the step dl4, wherein it is judged whether or not the number m of the lines to which the data are presently being inputted is equal to the maximum number L0 decided in the step d2. If m equals to L0, the input completes. On the other hand, if m does not reach L0, the program goes to the step dl5 to increase the content of the m counter by l so as to perform the process for the next line of the table. Subsequently, the content of the n counter is made 0 in the step dl6 to wait the input data for the first row of said next line of the table and the program goes to the step d3.

In case the judgment in the step d7 is "no", which means operation of any keys other than the data input, the program goes to the steps dl7, dl8, dl9 and d20 sequentially wherein it is judged that any of the cursor keys l5A to l5D are operated. In case the key which is now operated is not the cursor keys, the program goes to the step d4.

In case one of the cursor key such as right cursor key is operated, the judgment in the step dl7 is made "yes" and the program goes to the step d2l so as to increase the content of the n counter by l to displace the cursor (not shown) in the display unit. Similar operations may be made as to the cursor keys l5B to l5D performing the steps of dl8 and d22, dl9 and d23 and d20 and d23.

After the processes in the steps dl to d24, the program goes to the step d25, wherein it is judged whether or not the content of the n counter reaches the value (C0 + l). This is the process for judging whether or not the cursor is out of the table area beyond the right end edge of the table displayed in the display unit 2 in the line direction. In case the judgment is "yes" in the step d25, the content of the n counter is decreased by l in the step d26 so that the cursor is located in the range of the table, then the program goes to the step d27. In case the judgment is "no" in the step d25, the program goes to the step d27 directly.

It is judged in the step d27 whether or not the content of the m counter exceeds L0 + l for judging whether or not the cursor is out of the table area beyond top end edge of the table area in the row direction on the display unit 2. In case the cursor is out of the table area, the judgment becomes "yes" and the the program goes to the step d28 wherein the content of the m counter is decreased by l, thereby causing the cursor to be displayed in the table area of the display unit 2.

It is judged in the step d29 whether or not the content of the n counter is negative so as to judge whether or not the cursor is out of the table area beyond the left end line of the table displayed on the display unit 2. In case the judgment in the step d29 is "yes", the content of the n counter is made 0 in the step d30 and the program goes to the step d3l. With the judgment in the step d29 "no", the program goes to the step d3l directly.

It is judged in the step d3l whether or not the content of the m counter is negative so as to judge whether or not the cursor is out of the table area beyond the top end line of the table displayed on the display unit 2. In case the judgment in the step d3l is "yes", the content of the m counter is made 0 in the step d32 and the program goes to the step d4. With the judgment in the step d3l "no", the program goes to the step d4 directly.

By the above mentioned processing, there can be entered the table title, row item name, line item name and data to complete the desired table such as the table 2 of the students record of examination.

Referring to Fig. l0 showing a way of transposing the row and line of the matrix of the table, the data function Dh$ (m,n) already mentioned is a two variables function having the count values (m,n). In this table, the respective matrix elements are given sequential numbers of l, 2, 3, 4, ....beginning from the leftmost element on the top line of the matrix toward right end. The sequential numbers can be represented by

Dh (a) = Dh(m,n) (4)

wherein a = (m - l) C0 + n.

By the definition mentioned above, the data function Dh (m, n) corresponds to one variable function Dh-(a) in a one to one relation. Using the one variable function Dh(a), the contents of the table 2 can be expressed as the table 3.

TABLE 3

| | | |
|---|---|---|
| Dh (1) | Dh (2) | Dh (3) |
| Dh (4) | Dh (5) | Dh (6) |
| Dh (7) | Dh (8) | Dh (9) |
| Dh (10) | Dh (11) | Dh (12) |
| Dh (13) | Dh (14) | Dh (15) |
| Dh (16) | Dh (17) | Dh (18) |

The purpose of the process shown in Fig. 10 is to transpose the matrix shown in the table 3 into the matrix shown in the table 4.

TABLE 4

| | | | | | |
|---|---|---|---|---|---|
| 1 | 2 | 3 | 4 | 5 | 6 |
| Dh (1) | Dh (4) | Dh (7) | Dh (10) | Dh (13) | Dh (16) |
| 7 | 8 | 9 | 10 | 11 | 12 |
| Dh (2) | Dh (5) | Dh (8) | Dh (11) | Dh (14) | Dh (17) |
| 12 | 14 | 15 | 16 | 17 | 18 |
| Dh (3) | Dh (6) | Dh (9) | Dh (12) | Dh (15) | Dh (18) |

When the transposing key 121 operated in the step e1 the AA counter is set by 1 in the step e2. Subsequently, the numeric value data such as 63 assigned to Dh(l) is stored in the X register in the step e3.

The data function Dh(a) contains the numeric data shown in the table 2 and a flag (referred to as transposing completion flag and abbreviated as TCF in Fig. l0) which is 0 during transposing of the matrix and becomes l when the transposing of the matrix is completed. In the period immediately after the transposing of the matrix starts, the respective transposing completion flags with respect to all of the count values a are 0. The contents of the transposing completion flags and the numeric data of the table 2 are stored in the X register in the step e3.

In the step e4, it is judged whether or not the transposing completion flag is l. In case the judgment is "no", the program goes to the step e5 wherein the transposing completion flag in the data function Dh(l) is set by l.

In order to transposing the matrix, the count value a (l, 2, 3, l8 in this example) representing the sequential number of the elements of the source matrix is converted into the number a′ of the elements in the transposed matrix according to the following equation

a′ = {(a-l) - [a-l/C0] C0} L0 + {[a-l/C0] + l} (5).

The relation between the numbers a and a′ is shown in the table 5.

TABLE 5

| | | | | |
|---|---|---|---|---|
| 1 - 1,<br>6 - 14,<br>11 - 10, | 2 - 7,<br>7 - 3,<br>12 - 18, | 3 - 13,<br>8 - 9,<br>13 - 5, | 4 - 2,<br>9 - 15,<br>14 - 11, | 5 - 8<br>10 - 4,<br>15 - 17 |

Under the condition that the number a is set by 1 in the step e2, a' = 1 is calculated according to the equation 5 or table 5 in the step e7. Since the transposing completion flag of Dh (a' (= 1)) is set already in the step e5, the judgment in the step e8 is made "yes" and the program goes to the step e9 with the element Dh (1) fixed at the position of a' = 1 in the table 4.

In the step e9, the count value a is increased by 1 and it is judged in the step e10 whether or not the value a exceeds the maximum number 18 of the elements of the table. In this example, the value a has not yet exceeded 18 and the judgment is "no", and the program goes to the step e3, whereby the data of Dh (2) is taken in the X register and the transposing completion flag of Dh (2) is set to 1 in the step e5. In a similar manner as mentioned above, when a = 5 for example, a' = 8 can be calculated according to the equation 5 and the table 5. In the judgment of the transposing completion flag for the data function Dh(a' = (8)) in the step e8, it is judged as "no" and the program goes to the step d11 so as to set the transposing completion flag for Dh(8) to l.

In the step el2, the data of the data function Dh (a′ = 8) including the transposing completion flag thereof and the data of the data function Dh(2) stored in the x register as well as the transposing completion flag thereof are interchanged. Accordingly the data function Dh(a′ ( = 7)) is given by the data of Dh(2). Namely the data function Dh (2) is assigned at the position of a′ = 7 of the destination matrix in the table 4. The X register stores the data of the data function Dh(7).

Thereafter, the program goes to the step e7 to provide the data function Dh(a′ = (3)) in such a manner that the data function Dh(7) in the table 4 is situated at the position of a′ = 3 . Subsequently, the steps e7, e8, ell and el2 are performed and 4 - 2 process is performed wherein a′ = 2 is calculated in the step e7. At this period of time, only the data function Dh(l8) has not been transposed.

It is judged in the step e8 whether or not the transposing completion flag of the data function Dh(a″ (= 2)) is l. Since the transposing completion flag of Dh(l) has been already made l in the process of a = l, accordingly, the result of the judgment in the step e8 is yes and the program goes to the step e9 in which the content of the counter becomes a = 3 and in turn , the program goes to the step el2 in which the result of the judgment is "no" and the program goes to the step e3.

In the step e3, the content of the data function Dh(3) is transferred to the X register 3l with the content l of the transposing completion flag of the data function Dh(3). The judgment in the step e4 is "yes" and the program goes to the step e9. The process consisting of the steps e9, el0, e3 and e4 are repeatedly performed and the count value a is increased by l every process. When the content of the count value a reaches l9, the judgment in the step el0 is "yes" and the program goes to the step el3 wherein all of the transposing completion flags are reset to 0, whereby the transposing of the matrix of the source table 3 to the destination table 4 is completed.

As mentioned above, the transposing of the matrix can be performed using only the program shown in Fig. l0 and X register, whereby the operation of the transposing of the matrix can be easily completed using a memory of small capacity.

Fig. ll shows a modification of the device mentioned above in which steps d33 and d34 are added between the steps d6 and d7 in the process shown in Fig. l0 for enabling insertion and deletion of the lines or rows.

In case the deletion/insertion key 52 (abbreviated as D/l key in Figs. 5 and ll) is not operated, the program goes to the step d7 to perform the same operation as mentioned with reference to Fig. l0.

In case the D/l key is operated, the judgment in the step d33 is "yes" and the program goes to the step d34 for insertion or deletion of the data in the matrix of the table.

A way of inputting the numeric data of the respective elements of the matrix of the table such as student's point in the tables l or 2 is shown in Fig. l2 in which like processes in Fig. 9A are shown in like step number and the details thereof are omitted.

Referring to Fig. l2, the contents of the m counter n counter and h register are respectively reset to 0 in the step d50. Subsequently, in the step d2, there are preliminarily occupied the area of the numeric function Dh (m,n) of the data area shown in Fig. 3 up to such an extent of L0 × C0 and the non input data are stored therein.

As to the the string functions Th$(C) and Dh$(L)

Dh$(m);Th$(n); = ? (B)

are displayed in the display unit l in the step d52 and the key information inputted by the key input unit is read in in the step d4.

It is judged in the steps d5, d53 and d7 where the inputted key information comes from the numeric key group l3, total key (SUM/%) or line input key 27. In case the total key is operated the program goes to the step d54 from d53 for calculating the sum of the numeric values of the respective items in the row direction

$$\sum_{i=0}^{L0} Dh(i,n) \rightarrow Dh(L0+1,n) \qquad (6)$$

(n = 1, 2, 3, C0)

and the resultant data is set.

In the step d55 the sum of the numeric values of the line direction is calculated by the equation (7) and the result thereof is displayed.

$$\sum_{i=0}^{C0} Dh(m,i) \rightarrow Dh(m,C0+1)$$

(m = 1, 2, 3, ,L0).

The count values L and C are respectively incremented by 1 and the total flag is set by 1 in the step d56.

In the step d57, the character strings "total" is stored in the respective string functions Th$(L0 + 1) and Dh$(C0 + 1) and the display unit 2 can display the result of the sum as shown in the table 6.

TABLE 6

| | math. | Japanese | science | total |
|---|---|---|---|---|
| Aoki | 63 | 82 | 73 | 218 |
| Kato | 49 | 35 | 94 | 178 |
| Saito | 75 | 63 | 83 | 221 |
| Tiba | 93 | 46 | 63 | 202 |
| Numata | 24 | 35 | 42 | 101 |
| Hayasi | 38 | 79 | 56 | 173 |
| Yokoi | 63 | 95 | 74 | 232 |
| Total | 405 | 435 | 485 | 1325 |

After the table having the total values as shown in the table 8, in case the line input key 27 is operated so as to correct one or more of the elements in the table, the result of the judgment in the step d7 is made "yes", the program goes to the step d58, wherein It is judged whether or not the value of the total flag is l. In this case, the judgment is "yes" and the program goes to the step d59.

In the step d59, the content of L counter for the line item and C counter for the row item are decremented by l respectively, and the total flag is made 0. Thereafter, the content of the key input buffer 47 which is empty is transferred to the data function Dh(m, n) for storing respective total values in the step d60 and the content of the data function Dh(m, n) are deleted and the program goes to the step d52 through the steps d6l and d62, whereby the display of the total value at the designated part can be erased.

It is judged in the step d6l whether or not the row number of the table to which the data is inputted exceeds the maximum line value C0 so as to check whether the data are inputted in all of the row items with respect to the given line. In case the judgment is "no", the subsequent row input is enabled and the count value n is increased by l in the step d62, and the program goes to the step 52.

In case the judgment in the step d6l is "yes", this means that the data input of all row items of the given line is completed, the program goes to the step d63, wherein It is judged whether or not the content m of the counter representing the line number to which the data is presently inputted is equal to the maximum line number L0. In case the content m is equal to L0, the input process is completed. If the content m is not L0, the input in the rows of the following line is enabled and the count value m is increased by l in the step d64 initializing the content n to 0 in the step d65 to receive the data for the first of the new line. Then the program goes to the step d3.

Referring to Figs. l3 and l4 showing a display process, in which the information inputted from the key board of the computer l is transferred to the key input buffer 47 in the step fl. A right direction flag and a left direction flag in the system area 463 are reset to 0 in the step f2. It is judged in the step f3 whether or not the number of characters to be displayed exceeds the maximum digits of the display unit 2. In the present example, the maximum digits are 24. In case the number of characters to be displayed is less than 24, the program goes to the step f4 so that the inputted information stored in the key input buffer 47 is displayed in the display unit 2 and the display process ends.

In case the number of the characters to be displayed is more than 25, the judgment in the step f3 is "no" and the program goes to the step f5, wherein the leading 23 characters stored in the key input buffer 47 are displayed in the display unit 2 with the 24th digit of the display unit 2 displayed a right direction arrow mark → by which the operator knows the fact that there are one or more characters to be displayed in the display unit 2 other than the presently displayed characters. Then the right direction flag is set by l in the step f6 with the left direction flag reset to 0. A pointer CHR indicating digit the position of the character strings stored in the key input buffer 47 and to be displayed at the leftmost end position of the display unit 2 is set by l in the step f7.

In the step f8, the information of one or more keys inputted by the keyboard is read in. Subsequently It is judged in the step f9 whether or not the key now operated is right direction cursor key l5A. In case the operated key is right direction cursor key l5A, the judgment in the step f9 is "yes" and the program goes to the step fl0 to detect whether or not the right direction flag is l. With the judgment "yes" in the step fl0, the program goes to the step fll. In case the judgment in the step fl0 is "no", this means that the number of characters which is displayed in the display unit 2 is less than the maximum digit of the display display unit 2 and the cursor is moved in the right direction by one digit, the program goes to the step f8. In case the judgment in the step f8 is "no", the program goes to the step fl2 to judge whether or not the operated key is cursor left shift key l5B. In case the judgment in the step fl2 is "no", the program goes to the step f8. In case the judgment in the step fl2 is "yes", the program goes to the step fll in which it is judged whether or not the left direction flag is l. In case the judgment in the step fll is "yes", the program goes to the fl4. In case the judgment in the step fl4 is "no", the cursor is moved left by one character then the program goes to the step f8. In the step fl3, the data of 23 characters can be displayed in the display unit 2 with the mark → displayed at the 24th character position of the display unit 2. Also, in this case, the cursor right shift key l5A is in the depressed condition. Under such state, the value of the sum of the content of the pointer STC and 20 are made new content of the pointer STC. In the step fl5, suitable number of characters such as 23 characters stored in the key input buffer 47 and following to the digit indicated by the pointer STC are displayed from the second leftmost digit in the display unit 2. The first digit or the leftmost digit of the display unit 2 displays the mark ←.

Subsequently, It is judged in the step fl6 whether or not the sum of the number indicated by the pointer STC and 23 exceeds the total number of the characters stored in the key input buffer 47. This is the judgment whether or not all of the character strings stored in the key input buffer 47 have been displayed in the display unit 2. In case the judgment in the step fl6 is "yes", the program goes to the step fl7 to reset the right direction flag 0, subsequently the left direction flag is set to l in the step fl8. Thereafter, the program goes to the step f8 to wait succeeding key input.

In case there still remain characters which have not yet been displayed in the key input buffer 47, the judgment in the step fl6 becomes "no", and the program goes to the step fl9 to display the mark → at the 24th position of the display unit 2 and the program goes to the step fl8.

When the left cursor key l5B is inputted, the content of the pointer STC is decreased by 20 and the result of the decrement becomes the start position of the display. It is judged in the step f20 whether or not the content of the pointer STC is l so as to judge whether or not the pointer STC indicates the character situated in the first digit in the key input buffer 47. In case the judgment in the step f20 is "yes", the program goes to the step f5 to display the character strings stored in the key input buffer 47 from the first digit to 23th digit with the rightmost end digit of the display unit 2 displaying the mark →.

In case the judgment in the step fl9 is "no", the program goes to the step fl5.

By the arrangement mentioned above, if the total number of the characters to be displayed exceeds the maximum available digits of the the display unit 2, any marks → or ← are displayed at the rightmost end position or leftmost end position of the display unit 2, whereby the it is possible to notify the operator that there are one or more characters to be displayed but have not yet been displayed on the display unit 2. Advantageously the characters remain in the key input buffer can be displayed by operating the cursor keys l5A or l5B. It is an advantage of the device of the present invention that desired number of characters can be displayed on the small capacity of display unit without providing an additional display unit by the operation mentioned above.

## Claims

**1.** A data processing device (1) for processing and displaying data of one or more tables comprising

central processing means (40) for processing the data of the table,

memory means (46) having a plurality of memory areas for storing the respective data of the table with the line item names, said memory means having memory capacity of predetermined line number,

display means (2) having one or more display capacity of at least one line of characters but less than the line number of the memory means,

read means (25) for reading out the data of the line of the table indicated with the line item name and for causing the data and line item name to be displayed on said display means,

**characterized in**

- that said central processing means (40) processes the data into a plurality of table formats, said plurality of table formats forming the data into a matrix shape having a plurality of lines and a plurality of rows, each line and each row being able to be identified by line item names and row item names,
- that said memory means (46) is operably communicative with said central processing means, having a plurality of memory areas (462,464) for storing the data for said plurality of table formats and said line item names and said row item names,
- that operating means (25 thru 27, 15A thru 15D) operably communicative with said memory means (46) select a predetermined number of said plurality of lines and one of said plurality of rows from one of said plurality of memory areas of said memory means (46) corresponding to one of said plurality of table formats,
- that said read means (25) read out said predetermined number of lines and said one row of said one table format and said line item name and row item name from said memory means (46) in response to said selection by operating means, and
- that said display means (2), is operably communicative with said memory means (46) for only displaying said predetermined number of lines and said one row of said one table format in response to said read means (25) and comprises display control means (42) for developing an additional data indicator on said display means (2) indicating that additional lines and rows of the data precedes or follows said predetermined number of lines and said one row being presently displayed by said display means (2).

**2.** The data processing device according to claim 1, further comprising transposing means (464,121) operably communicative with said memory means (46), for transposing the data of said plurality of lines and said plurality of rows in one table format into another table format of said plurality of table formats.

**3.** The data processing device according to claim 1, comprising means for controlling a predetermined calculation time of the data of said plurality of table formats and starting a calculation of the data after predetermined data have been determined to be entered in the data processing device by said central processing means (40) and displaying said calculation by said display means (2).

## Revendications

**1.** Dispositif de traitement de données (1) pour traiter et afficher des données d'une ou plusieurs tables comprenant:

un moyen de traitement central (40) pour traiter les données de la table,

un moyen formant mémoire (46) comportant une multiplicité de zones de mémoire pour enregistrer les données respectives de la table avec les noms des articles de lignes, ledit moyen formant mémoire ayant une capacité de mémoire d'un nombre de lignes prédéterminé,

un moyen d'affichage (2) ayant une ou plusieurs possibilités d'affichage d'au moins une ligne de caractères mais de moins que le nombre de lignes du moyen formant mémoire,

un moyen de lecture (25) pour lire les données de la ligne de la table identifiée par le nom de l'article de ligne et pour faire afficher les données et le nom de l'article de ligne par ledit moyen d'affichage,

caractérisé en ce que:

- ledit moyen de traitement central (40) traite les données pour en former une multiplicité de formats de table, ladite multiplicité de formats de table disposant les données sous la forme d'une matrice ayant une multiplicité de lignes et une multiplicité de rangées, chaque ligne et chaque rangée pouvant être identifiée par des noms d'articles de lignes et par des noms d'articles de rangées,

ledit moyen formant mémoire (46) communique fonctionnellement avec ledit moyen de traitement central, et comporte une multiplicité de zones de mémoire (462, 464) pour enregistrer les données pour ladite multiplicité de formats de table et lesdits noms d'articles de lignes et lesdits noms d'articles de rangées,

des moyens d'actionnement (25 à 27, 15A à 15D) qui communiquent fonctionnellement avec ledit moyen formant mémoire (46) sélectionnent un nombre prédéterminé de lignes de ladite multiplicité de lignes et l'une des rangées de ladite multiplicité de rangées à partir de l'une des zones de ladite multiplicité de zones de mémoire dudit moyen formant mémoire (46) correspondant à l'un des formats de ladite multiplicité de formats de table,

ledit moyen de lecture (25) lit ledit nombre prédéterminé de lignes et ladite rangée dudit format de table et ledit nom d'article de ligne et ledit nom d'article de rangée à partir dudit moyen formant mémoire (46) en réponse à ladite sélection par ledit moyen d'actionnement, et

ledit moyen d'affichage (2) communique fonctionnellement avec ledit moyen formant mémoire (46) pour n'afficher que ledit nombre prédéterminé de lignes et ladite rangée dudit format de table en réponse audit moyen de lecture (25) et comprend un moyen de commande d'affichage (42) pour élaborer un indicateur de données supplémentaire sur ledit moyen d'affichage (2) indiquant que des lignes et rangées supplémentaires de données précèdent ou suivent ledit nombre prédéterminé de lignes et ladite rangée couramment affichées par ledit moyen d'affichage (2).

**2.** Dispositif de traitement de données selon la revendication 1, comprenant en outre un moyen de transposition (464, 121) communiquant fonctionnellement avec ledit moyen formant mémoire (46), pour transposer les données de ladite multiplicité de lignes et de ladite multiplicité de rangées d'un format de table dans un autre format de table de ladite multiplicité de formats de table.

**3.** Dispositif de traitement de données selon la revendication 1, comprenant un moyen pour commander un temps prédéterminé de calcul des données de ladite multiplicité de formats de table et commencer un calcul des données après qu'il a été déterminé que les données prédéterminées ont été introduites dans le dispositif de traitement de données par ledit moyen de traitement central (40) et pour faire afficher ledit calcul par ledit moyen d'affichage (2).

**Patentansprüche**

**1.** Datenverarbeitungsanlage (1) zum Verarbeiten und Anzeigen von Daten von einer oder mehreren Tabellen, mit

einer zentralen Verarbeitungseinheit (40) zum Verarbeiten der Daten der Tabelle,

einer Speichereinrichtung (46) mit mehreren Speicherbereichen, zum Speichern der jeweiligen Daten der Tabelle mit den Zeilenpostennamen, wobei die Speichereinrichtung eine Speicherkapazität von einer vorbestimmten Zeilenzahl hat,

einer Anzeigeeinrichtung (2) mit einer oder mehreren Anzeigekapazitäten von mindestens einer Zeile von Zeichen, jedoch unterhalb der Zeilenzahl der Speichereinrichtung,

Leseeinrichtungen (25) zum Auslesen der mit dem Zeilenpostennamen bezeichneten Daten der Zeile der Tabelle und zum Veranlassen des Anzeigens der Daten und des Zeilenpostennamens auf der Anzeigeeinrichtung,

**dadurch gekennzeichnet,**

- daß die zentrale Verarbeitungseinheit (40) die Daten in mehrere Tabellenformate verarbeitet, welche die Daten in eine Matrixgestalt bringen, die eine Vielzahl von Zeilen und eine Vielzahl von Spalten hat, wobei jede Zeile und jede Spalte durch Zeilenpostennamen und Spaltenpostennamen identifizierbar ist,
- daß die Speichereinrichtung (46) betriebsmäßig mit der zentralen Verarbeitungseinheit kommunizieren kann, wobei die Speichereinrichtung (46) mehrere Speicherbereiche (462,464) zum Speichern der Daten für die Gruppe von Tabellenformaten sowie die Zeilenpostennamen und Spaltenpostennamen hat,
- daß Betriebseinrichtungen (25 bis 27, 15A bis 15D), die betriebsmäßig mit der Speichereinrichtung (46) kommunizieren können, aus der Gruppe von Speicherbereichen der Speichereinrichtung (46) entsprechend einem Format der Gruppe von Tabellenformaten eine vorbestimmte Anzahl von Zeilen aus der Vielzahl von Zeilen und eine Spalte aus der Vielzahl der Spalten wählen,
- daß die Leseeinrichtungen (25) als Antwort auf die durch die Betriebseinrichtungen erfolgte Wahl die vorbestimmte Anzahl von Zeilen und die eine Spalte des Tabellenformates sowie den Zeilenpostennamen und den Spaltenpostennamen aus der Speichereinrichtung (46) auslesen, und
- daß die Anzeigeeinrichtung (2) betriebsmäßig so mit der Speichereinrichtung (46) kommunizieren kann, daß als Reaktion auf die Leseeinrichtungen (25) lediglich die vorbestimmte Anzahl von Zeilen und die eine Spalte des Tabellenformates angezeigt werden, und eine Anzeigesteuereinrichtung (42) zur Schaffung eines zusätzlichen Datenindikators auf der Anzeigeeinrichtung (2) aufweist, der anzeigt, daß zusätzliche Zeilen oder Spalten der Daten der vorbestimmten Anzahl von Zeilen und der einen Spalte, die momentan von der Anzeigeeinrichtung (2) angezeigt werden, vorausgehen oder folgen.

**2.** Datenverarbeitungsanlage (1) nach Anspruch 1, des weiteren enthaltend Transponiereinrichtungen (464, 121), die betriebsmäßig mit der Speichereinrichtung (46) kommunizieren können, zum Transponieren der Daten der Vielzahl von Zeilen und der Vielzahl von Spalten in einem Tabellenformat in ein anderes Tabellenformat der Gruppe von Tabellenformaten.

**3.** Datenverarbeitungsanlage nach Anspruch 1, mit Einrichtungen zum Steuern einer vorbestimmten Berechnungszeit der Daten der Gruppe von Tabellenformaten und zum Starten der Berechnung der Daten, nachdem durch die zentrale Verarbeitungseinheit (40) vorbestimmte Daten zur Eingabe in die Datenverarbeitungsanlage bestimmt worden sind, und zum Anzeigen der Berechnung durch die Anzeigeeinrichtung (2).

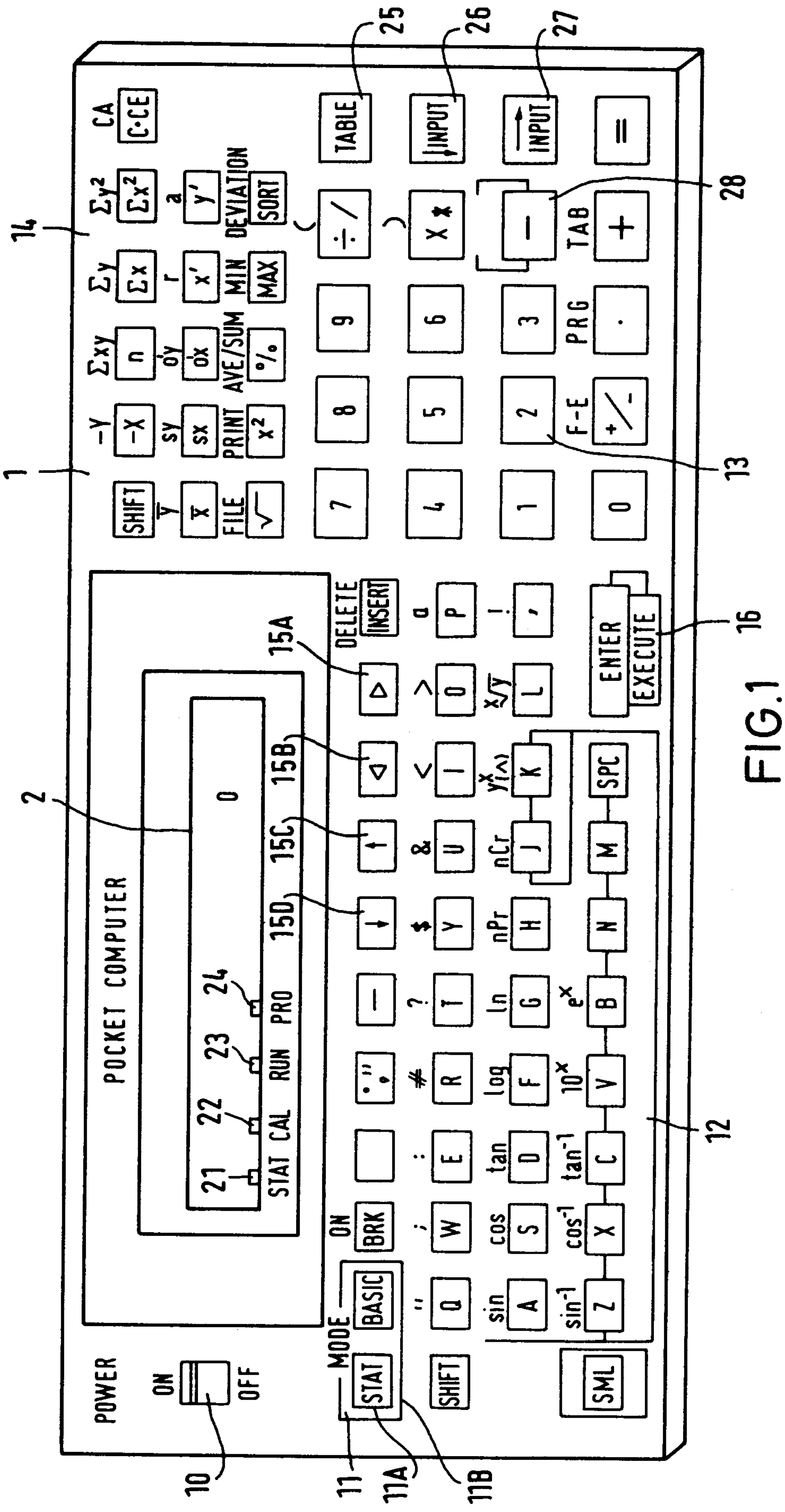
POCKET COMPUTER
POWER
ON
OFF
MODE
STAT
BASIC
SHIFT
SML
ENTER
EXECUTE
DELETE
INSERT
TABLE
INPUT
INPUT
SORT
DEVIATION
MAX
MIN
AVE/SUM
PRINT
FILE
CA
C·CE
STAT CAL RUN PRO
1
2
10
11
11A
11B
12
13
14
15A
15B
15C
15D
16
21
22
23
24
25
26
27
28

FIG.1

FIG. 2

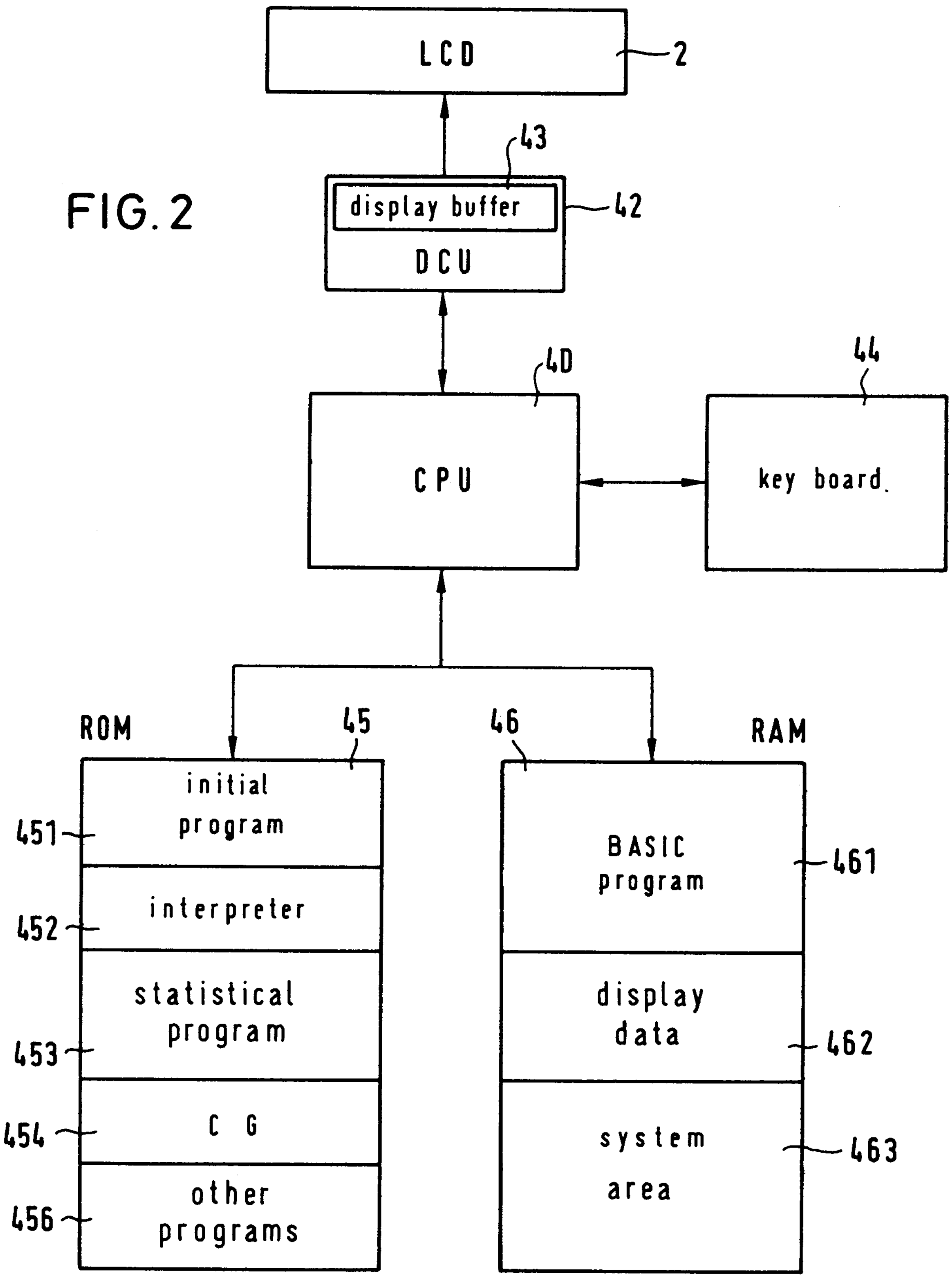
LCD
2
43
display buffer
42
DCU
4D
44
CPU
key board
ROM
45
46
RAM
initial program
451
interpreter
452
statistical program
453
C G
454
other programs
456
BASIC program
461
display data
462
system area
463

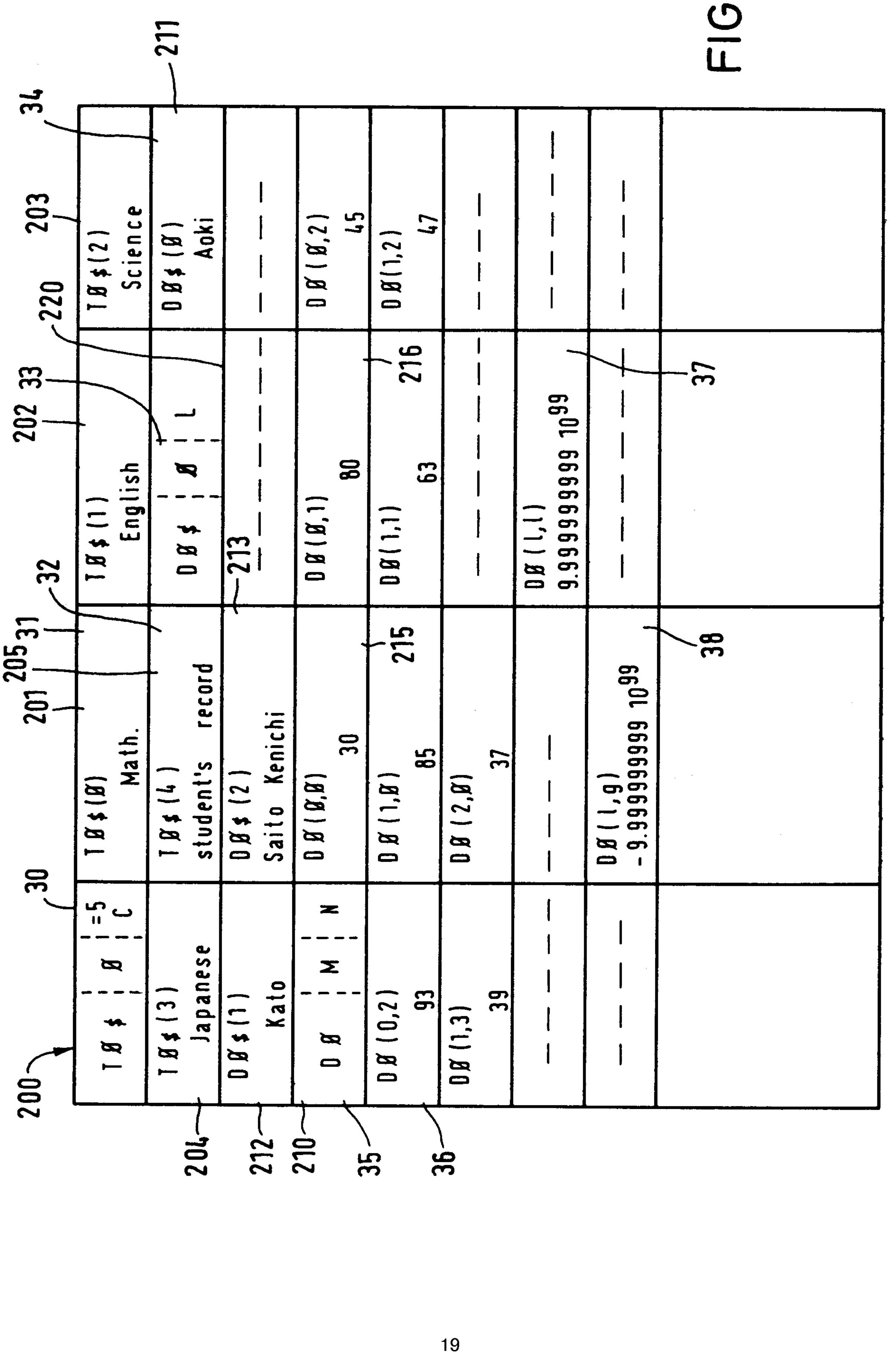

TØ$ Ø =5 C
TØ$(Ø) Math.
TØ$(1) English
TØ$(2) Science
TØ$(3) Japanese
TØ$(4) student's record
DØ$ Ø L
DØ$(Ø) Aoki
DØ$(1) Kato
DØ$(2) Saito Kenichi
DØ M N
DØ(Ø,Ø) 30
DØ(Ø,1) 80
DØ(Ø,2) 45
DØ(0,2) 93
DØ(1,Ø) 85
DØ(1,1) 63
DØ(1,2) 47
DØ(1,3) 39
DØ(2,Ø) 37
DØ(1,1) 9.999999999 10^99
DØ(1,9) -9.999999999 10^99
200
201
202
203
204
205
210
211
212
213
215
216
220
30
31
32
33
34
35
36
37
38


FIG.3

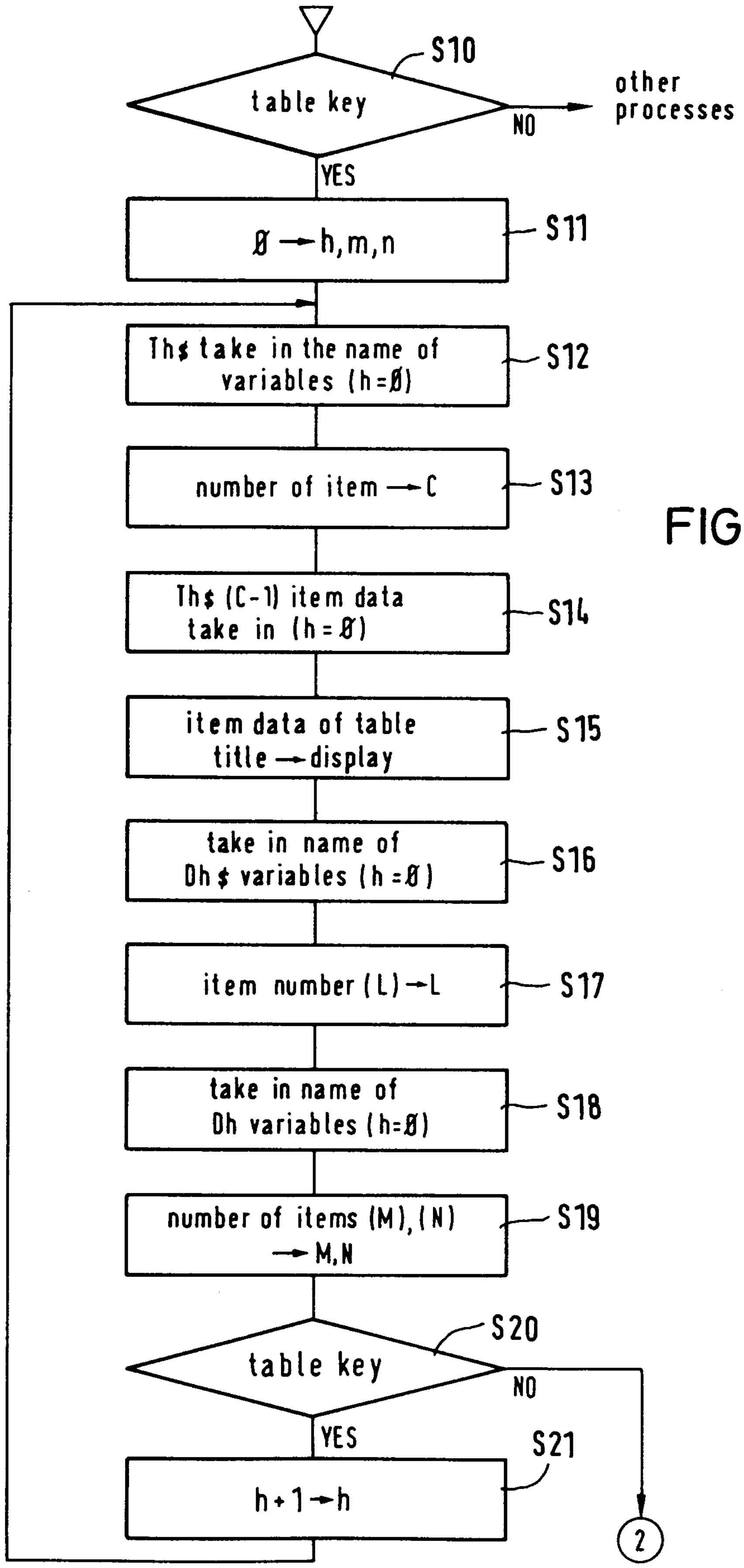
S10
table key
NO
other processes
YES
Ø → h,m,n
S11
Th$ take in the name of variables (h=Ø)
S12
number of item → C
S13
Th$ (C-1) item data take in (h=Ø)
S14
item data of table title → display
S15
take in name of Dh$ variables (h=Ø)
S16
item number (L) → L
S17
take in name of Dh variables (h=Ø)
S18
number of items (M),(N) → M,N
S19
S20
table key
NO
YES
S21
h+1 → h
2

FIG.4A

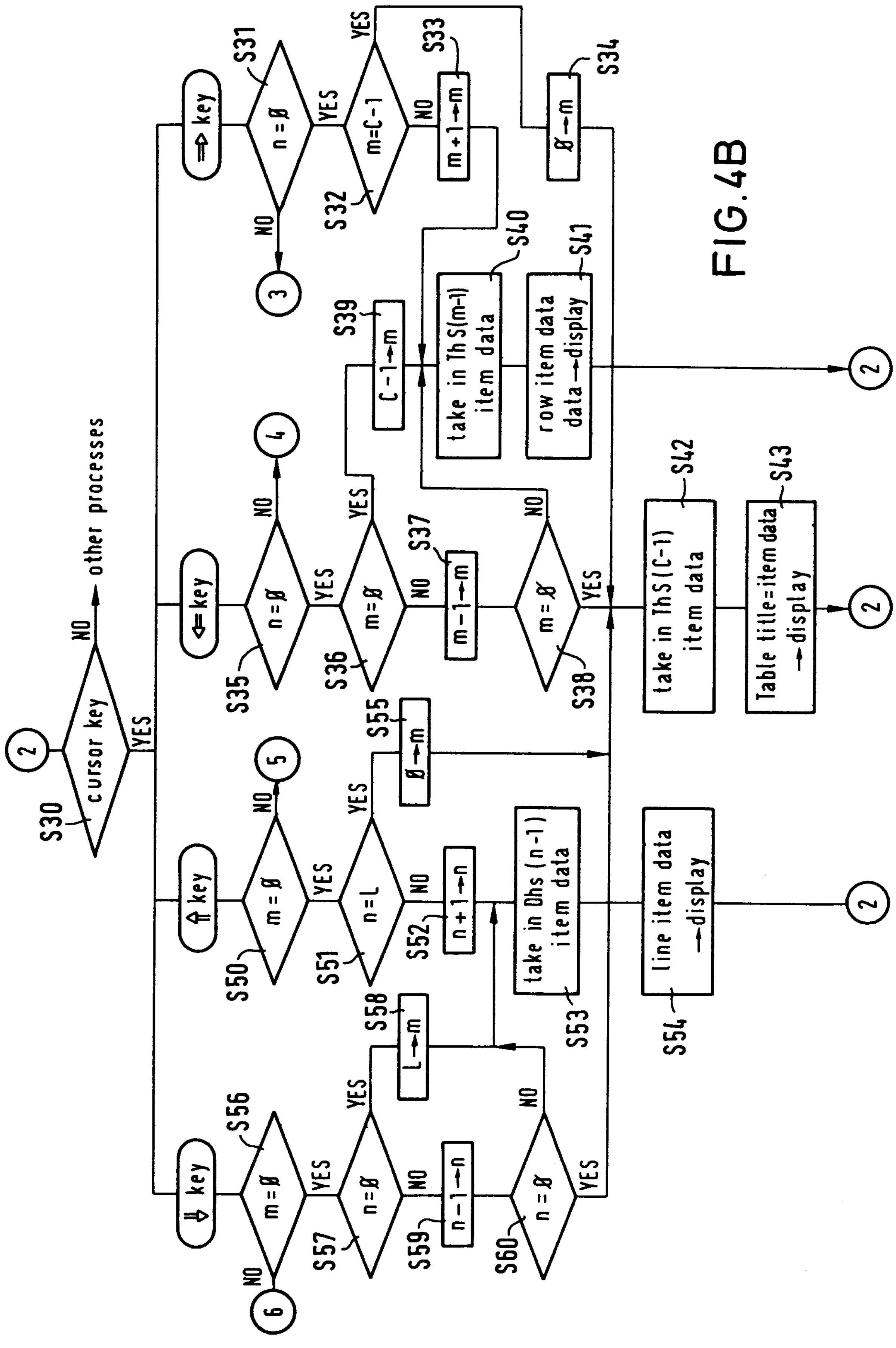

2
cursor key
S30
YES
NO
other processes
⇒ key
n = Ø
S31
YES
NO
3
m=C-1
S32
YES
NO
m+1→m
S33
Ø→m
S34
⇐ key
n=Ø
S35
NO
4
m=Ø
S36
YES
C-1→m
S39
m-1→m
S37
m=Ø
S38
take in ThS(m-1) item data
S40
row item data data→display
S41
take in ThS(C-1) item data
S42
Table title=item data →display
S43
⇑ key
m=Ø
S50
5
n=L
S51
Ø→m
S55
n+1→n
S52
take in Dhs (n-1) item data
S53
line item data →display
S54
⇓ key
m=Ø
S56
6
n=Ø
S57
L→m
S58
n-1→n
S59
n=Ø
S60


FIG.4B

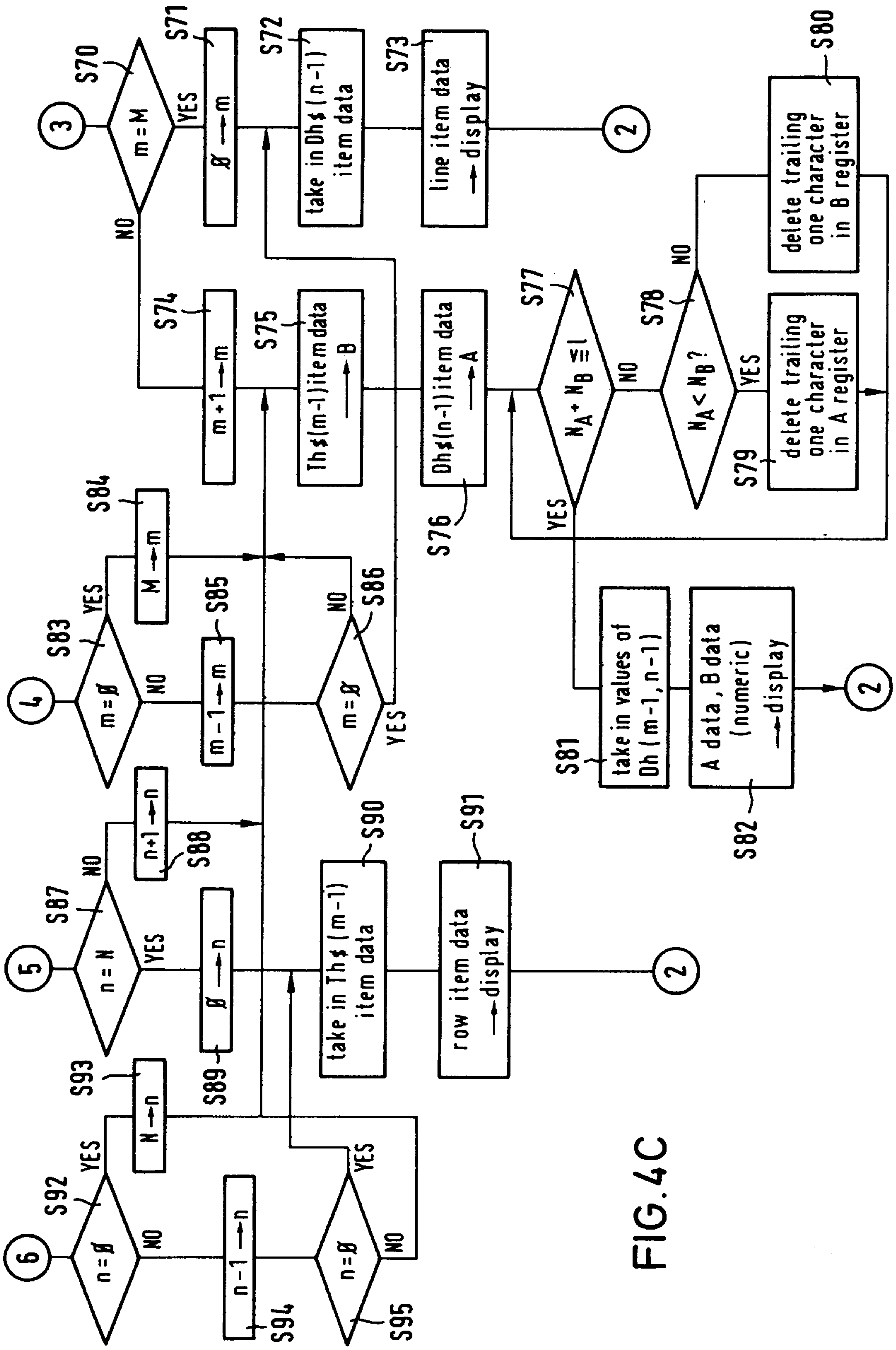

S70
m=M
YES
NO
S71
Ø → m
S72
take in Oh$(n-1) item data
S73
line item data → display
S74
m+1 → m
S75
Th$(m-1) item data → B
S76
Oh$(n-1) item data → A
S77
$N_A + N_B \leqq l$
YES
NO
S78
$N_A < N_B$?
YES
NO
S79
delete trailing one character in A register
S80
delete trailing one character in B register
S81
take in values of Dh(m-1, n-1)
S82
A data, B data (numeric) → display
S83
m=Ø
YES
NO
S84
M → m
S85
m-1 → m
S86
m=Ø
YES
NO
S87
n=N
YES
NO
S88
n+1 → n
S89
Ø → n
S90
take in Th$(m-1) item data
S91
row item data → display
S92
n=Ø
YES
NO
S93
N → n
S94
n-1 → n
S95
n=Ø
YES
NO
2
3
4
5
6


FIG.4C

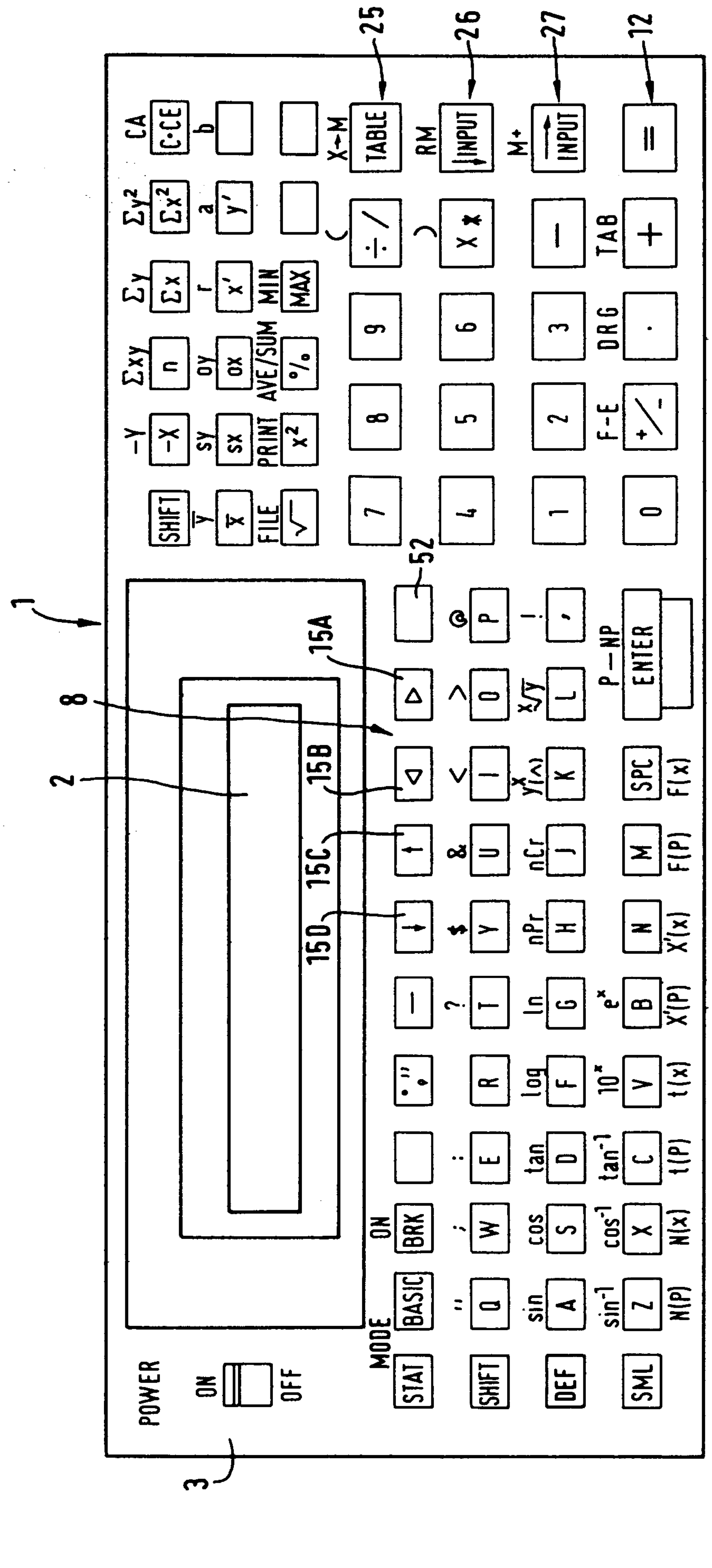
1
2
3
8
12
15A
15B
15C
15D
25
26
27
52
POWER
ON
OFF
MODE
STAT
BASIC
SHIFT
DEF
SML
ENTER
TABLE
INPUT

FIG.5

FIG.6

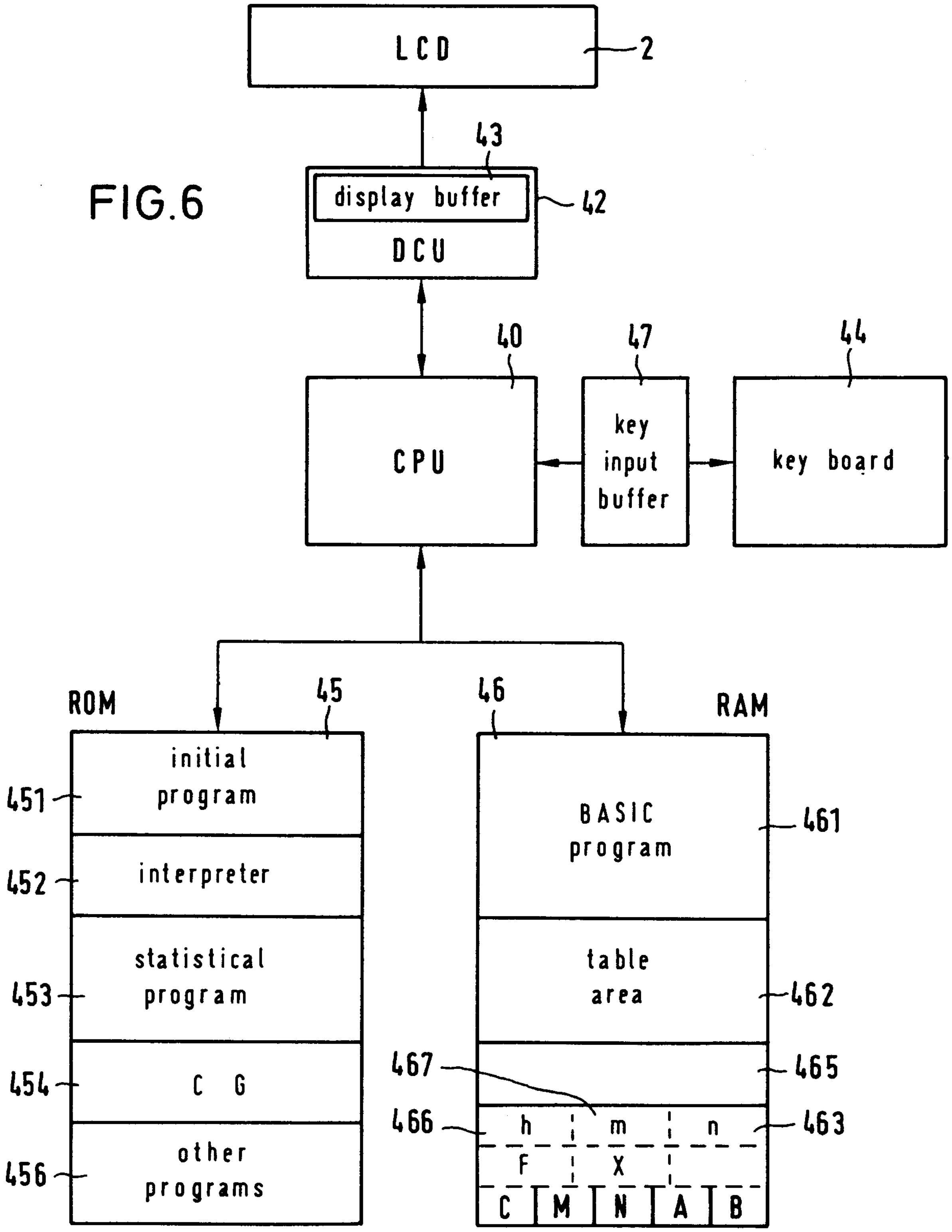
LCD
2
43
display buffer
42
DCU
40
47
44
CPU
key
input
buffer
key board
ROM
45
46
RAM
initial
program
451
interpreter
452
statistical
program
453
C G
454
other
programs
456
BASIC
program
461
table
area
462
467
465
466
463
h
m
n
F
X
C
M
N
A
B

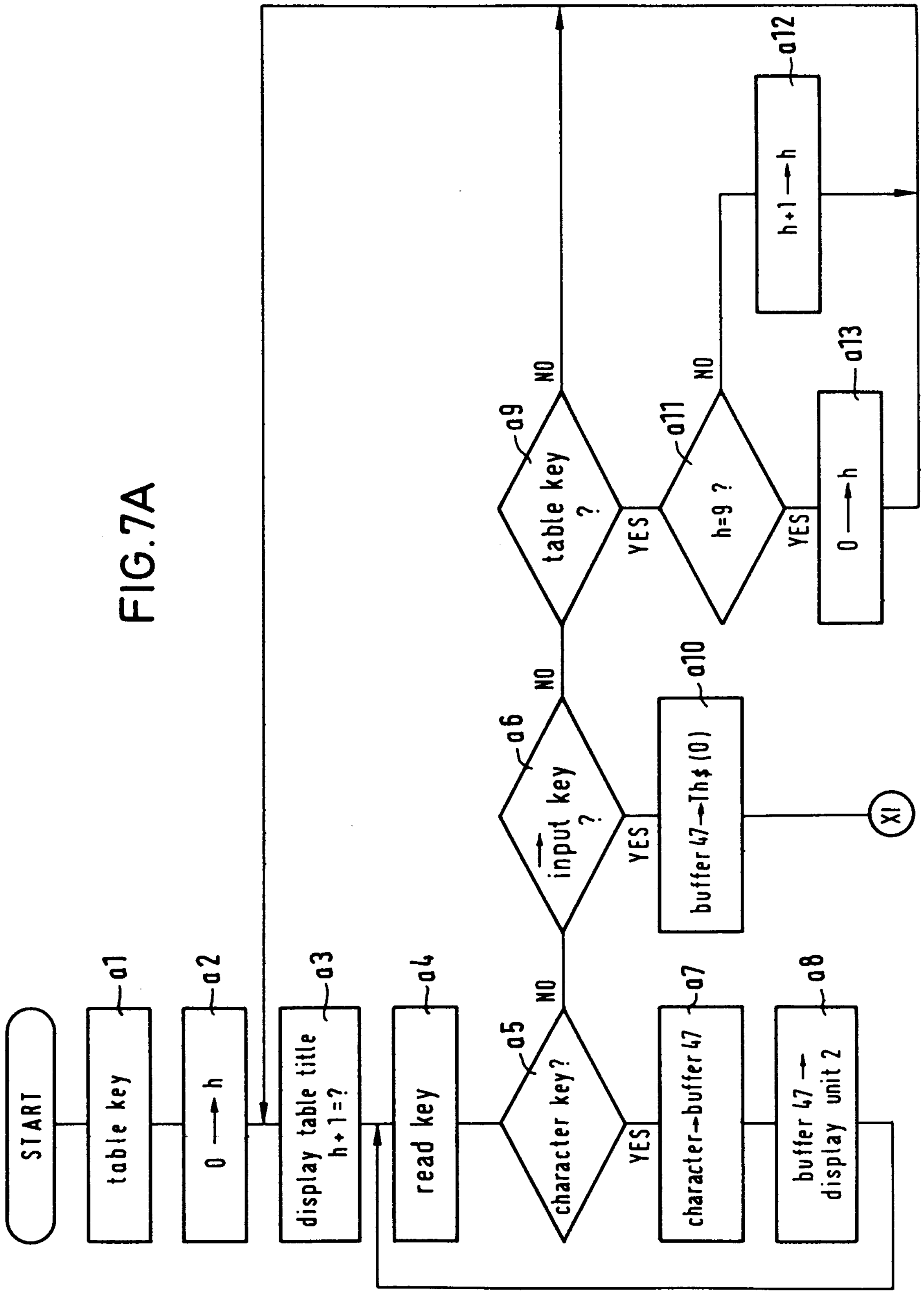
START
table key
a1
0 ⟶ h
a2
display table title h+1=?
a3
read key
a4
character key?
a5
YES
NO
character→buffer 47
a7
buffer 47→ display unit 2
a8
input key ?
a6
YES
NO
buffer 47→Th$(0)
a10
XI
table key ?
a9
YES
NO
h=9 ?
a11
YES
NO
0 ⟶ h
a13
h+1 ⟶ h
a12

FIG.7A

FIG.7B

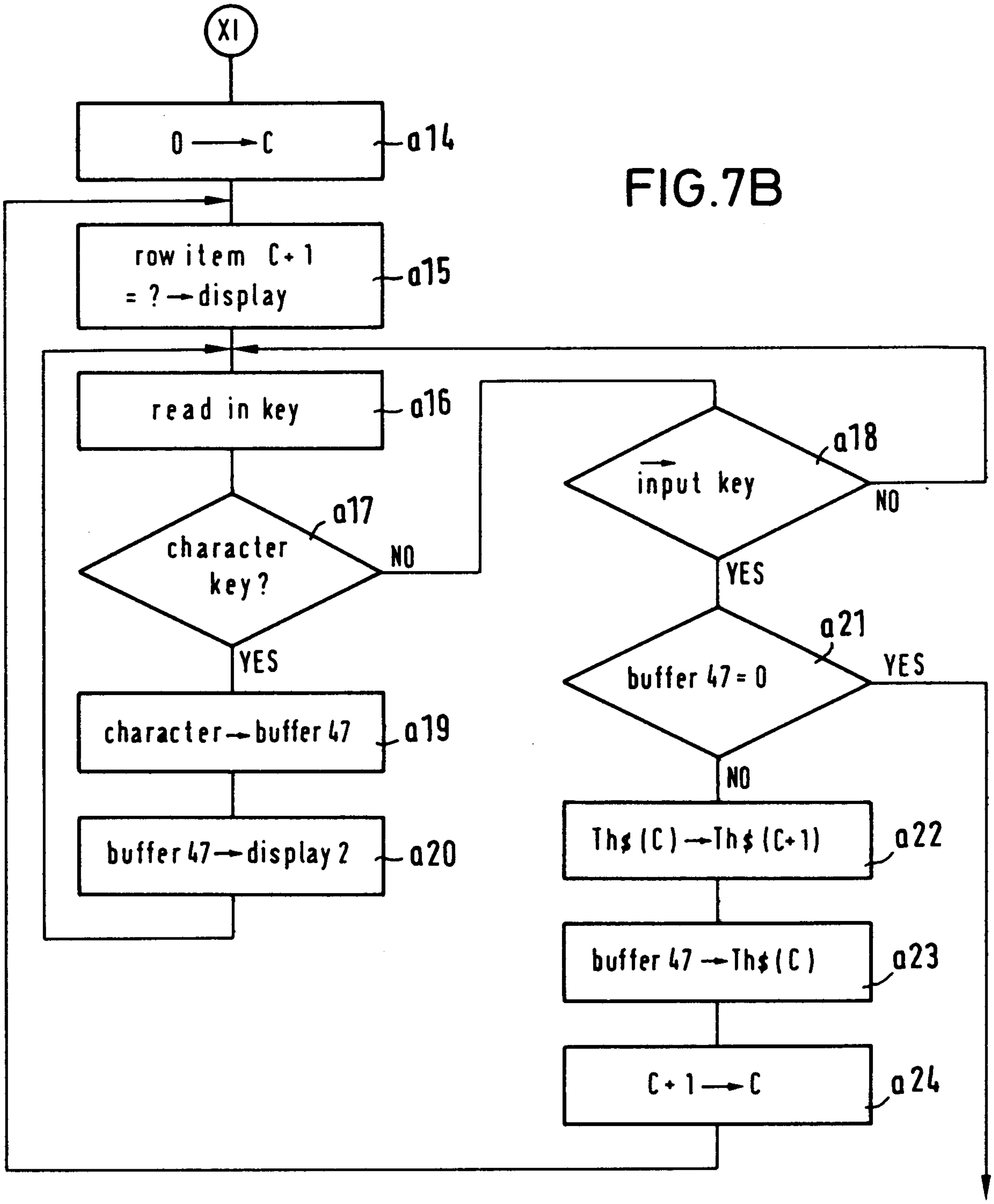
XI
0 → C
a14
row item C+1
= ? → display
a15
read in key
a16
character
key ?
a17
NO
YES
character → buffer 47
a19
buffer 47 → display 2
a20
input key
a18
NO
YES
buffer 47 = 0
a21
YES
NO
Th$ (C) → Th$ (C+1)
a22
buffer 47 → Th$ (C)
a23
C + 1 → C
a24

FIG.8

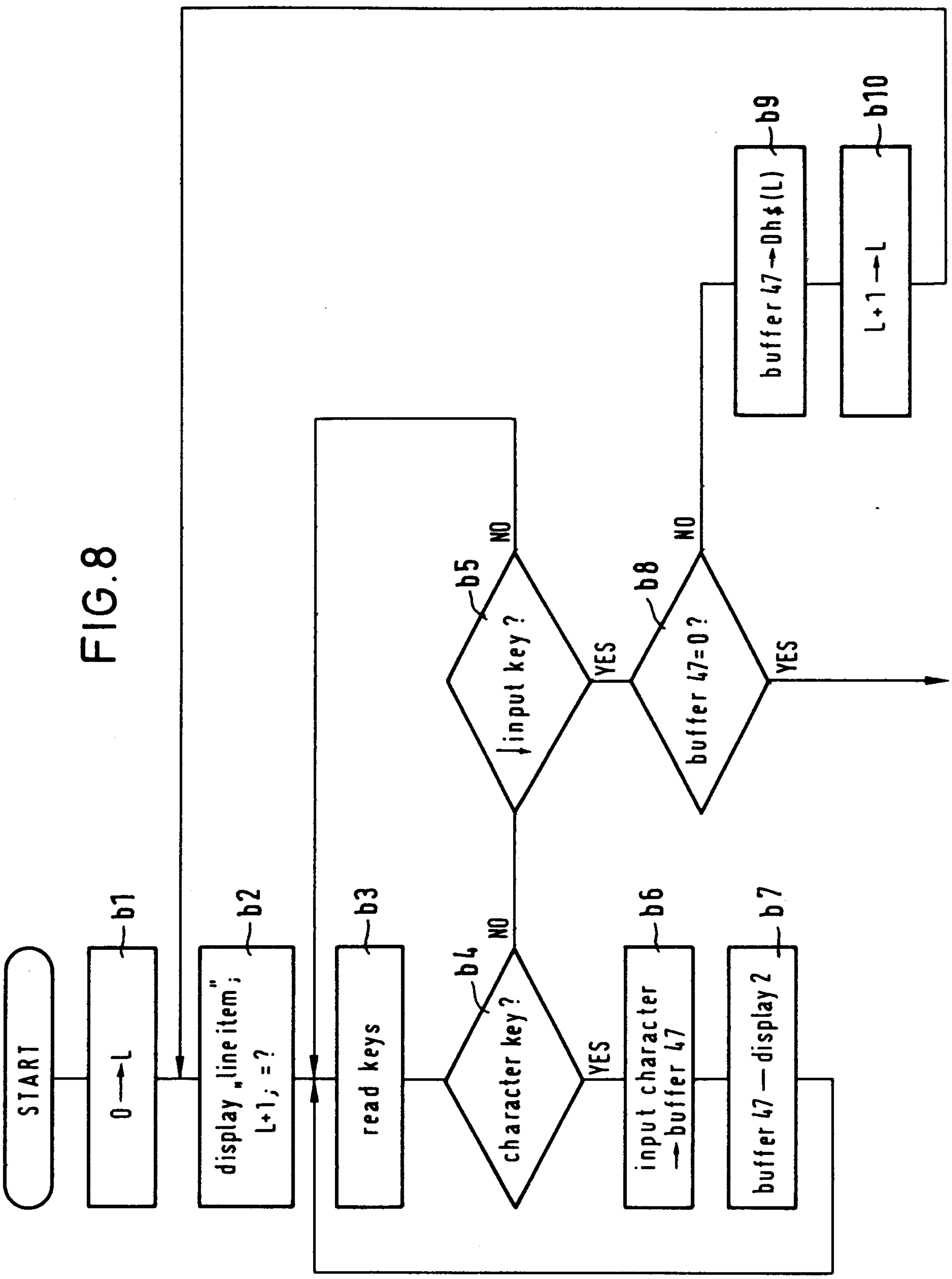
START
0 → L
b1
display „line item"; L+1; =?
b2
read keys
b3
character key?
b4
NO
YES
input character → buffer 47
b6
buffer 47 — display 2
b7
input key ?
b5
NO
YES
buffer 47=0?
b8
NO
YES
buffer 47 → Oh$(L)
b9
L+1 → L
b10

FIG.9A

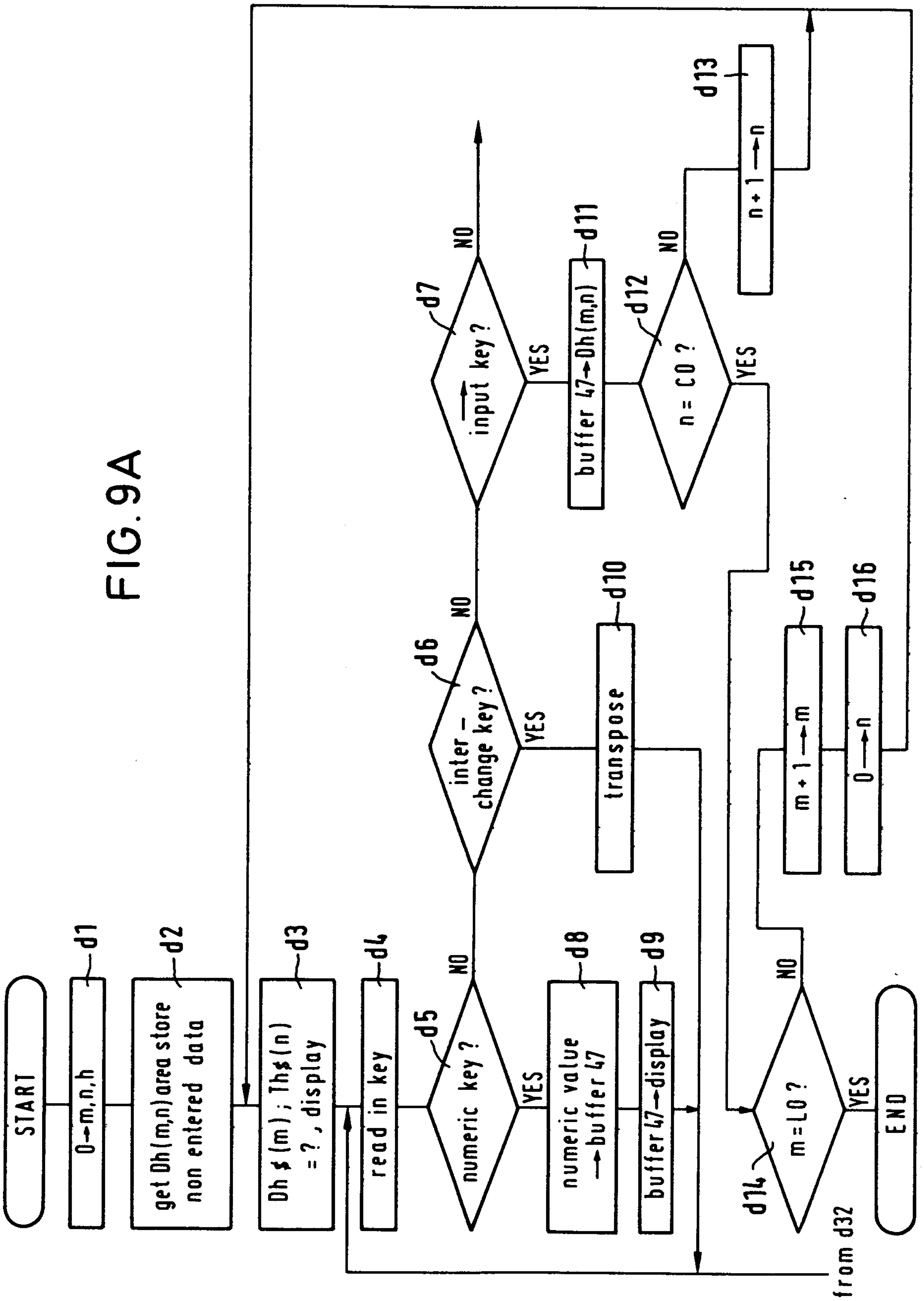
START
0→m,n,h
d1
get Dh(m,n) area store non entered data
d2
Dh$(m) ; Th$(n) = ? , display
d3
read in key
d4
numeric key ?
d5
NO
YES
numeric value →buffer 47
d8
buffer 47→display
d9
inter – change key ?
d6
NO
YES
transpose
d10
input key ?
d7
NO
YES
buffer 47→Dh(m,n)
d11
n = C0 ?
d12
NO
YES
n+1 →n
d13
m=L0 ?
d14
NO
YES
m+1 →m
d15
0 →n
d16
END
from d32

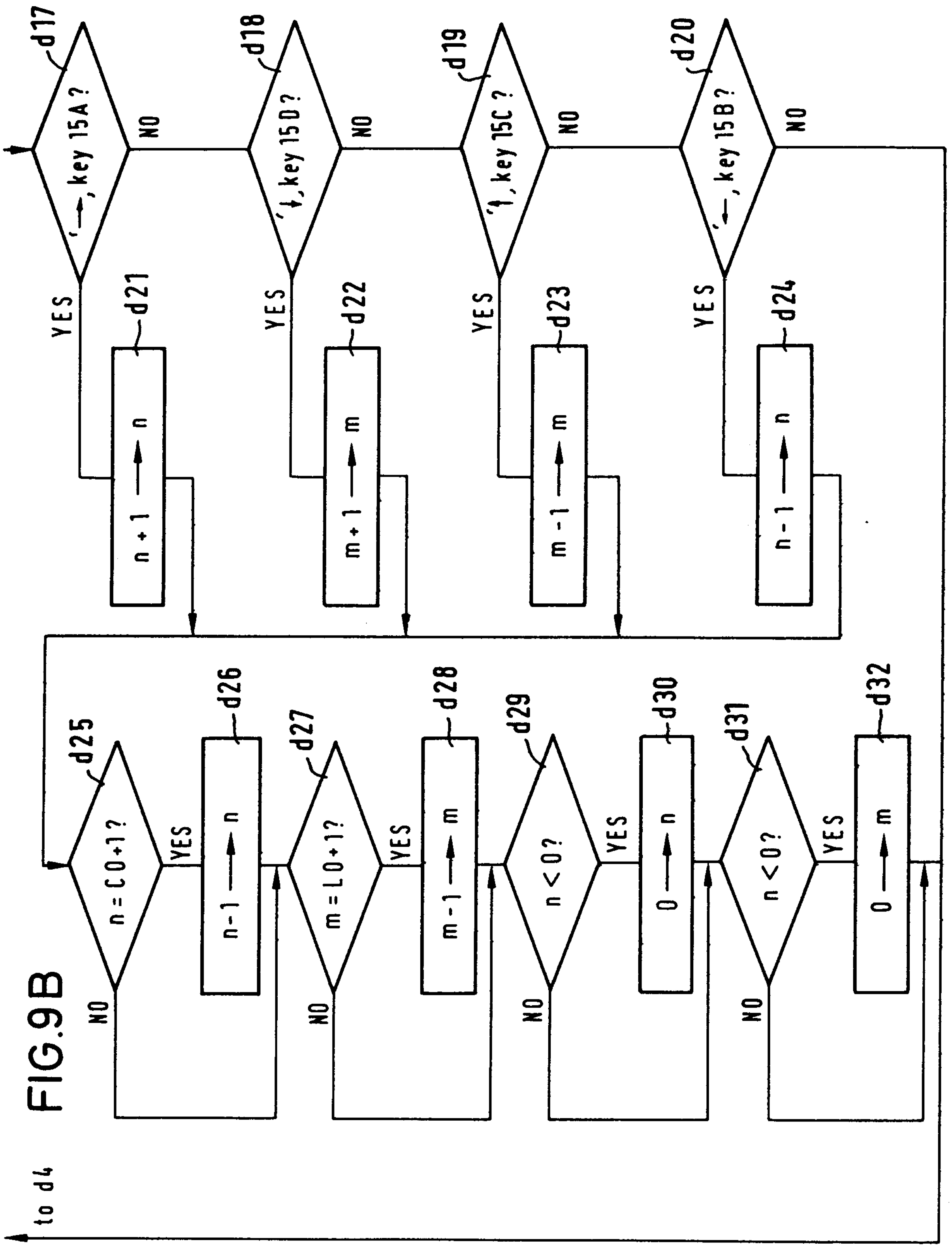
'→', key 15A ?
d17
'↓', key 15D ?
d18
'↑', key 15C ?
d19
'←', key 15B ?
d20
NO
YES
n + 1 → n
d21
m + 1 → m
d22
m - 1 → m
d23
n - 1 → n
d24
n = C0+1?
d25
n - 1 → n
d26
m = L0+1?
d27
m - 1 → m
d28
n < 0?
d29
0 → n
d30
n < 0?
d31
0 → m
d32
to d4

FIG.9B

FIG.10

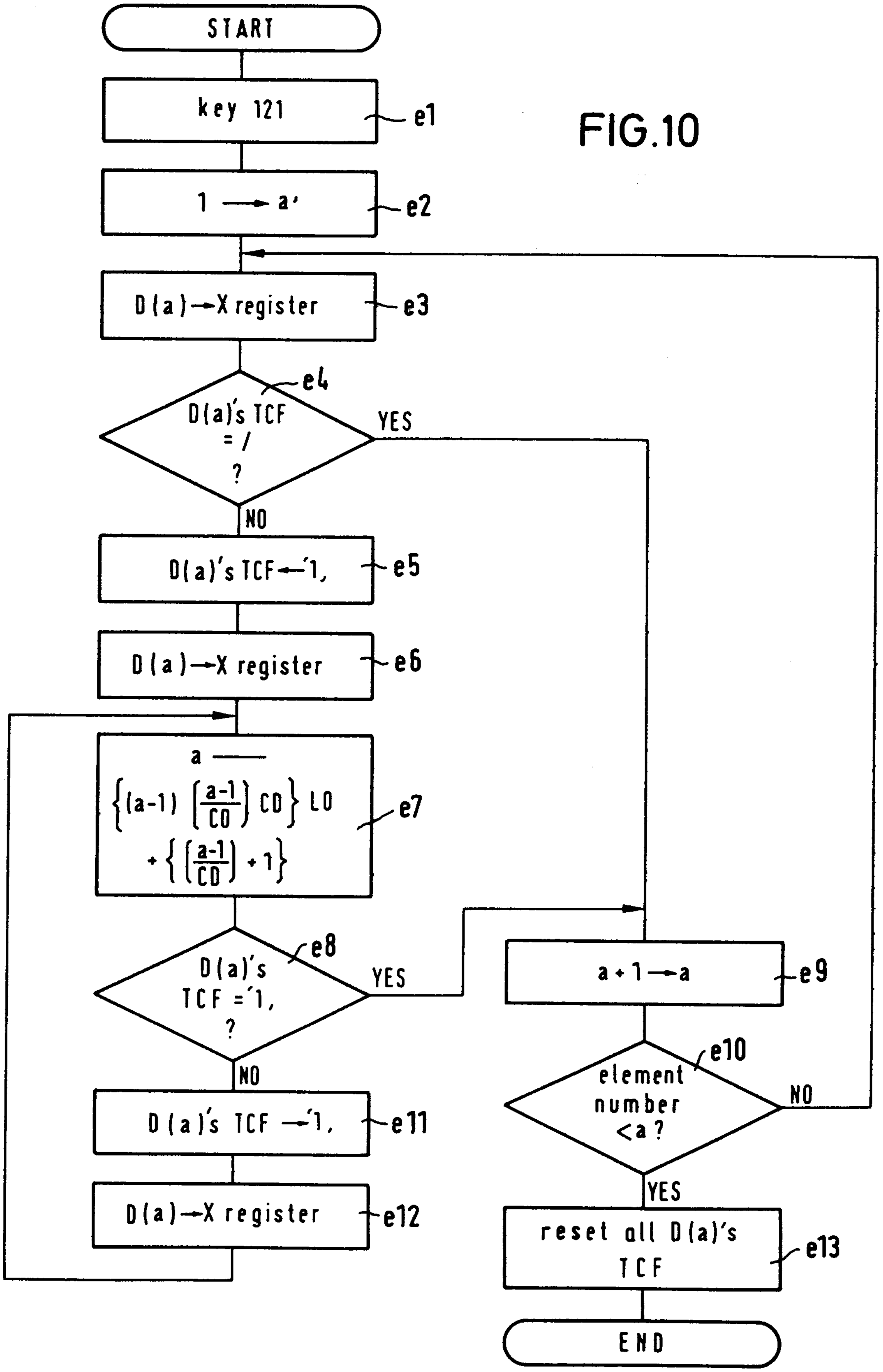
START
key 121
e1
1 → a'
e2
D(a) → X register
e3
D(a)'s TCF = / ?
e4
YES
NO
D(a)'s TCF ← '1,
e5
D(a) → X register
e6
a ← {(a-1) [(a-1)/CO] CO} LO + {[(a-1)/CO] + 1}
e7
D(a)'s TCF = '1, ?
e8
YES
NO
D(a)'s TCF → '1,
e11
D(a) → X register
e12
a + 1 → a
e9
element number <a ?
e10
NO
YES
reset all D(a)'s TCF
e13
END

FIG.11

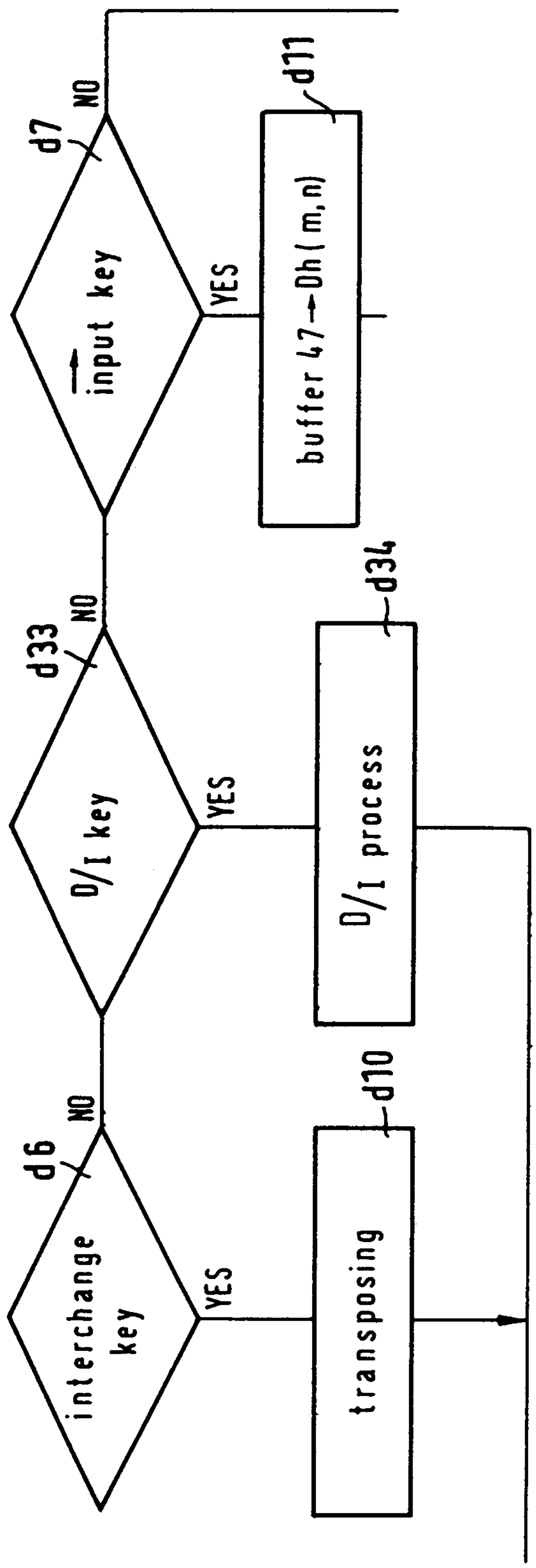
interchange key
d6
NO
YES
transposing
d10
D/I key
d33
NO
YES
D/I process
d34
input key
d7
NO
YES
buffer 47→Dh(m,n)
d11

FIG.12

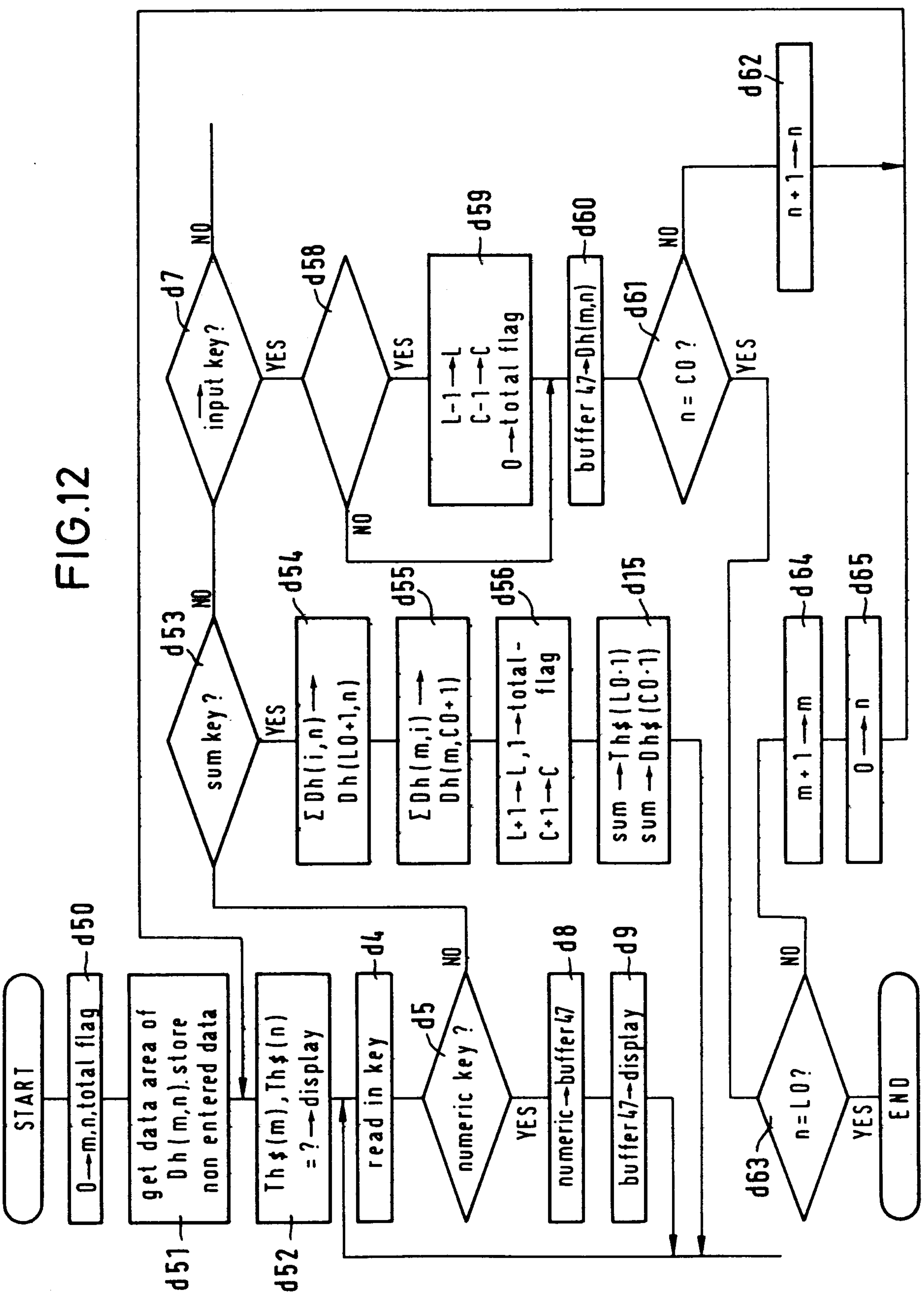

START
0→m,n,total flag
d50
get data area of Dh(m,n).store non entered data
d51
Th$(m),Th$(n) =?→display
d52
read in key
d4
numeric key ?
d5
YES
NO
numeric→buffer47
d8
buffer47→display
d9
sum key ?
d53
ΣDh(i,n)→Dh(L0+1,n)
d54
ΣDh(m,i)→Dh(m,C0+1)
d55
L+1→L,1→total-flag
C+1→C
d56
sum→Th$(L0·1)
sum→Dh$(C0·1)
d15
input key?
d7
d58
L-1→L
C-1→C
0→total flag
d59
buffer47→Dh(m,n)
d60
n=C0 ?
d61
n+1→n
d62
n=L0?
d63
m+1→m
d64
0→n
d65
END

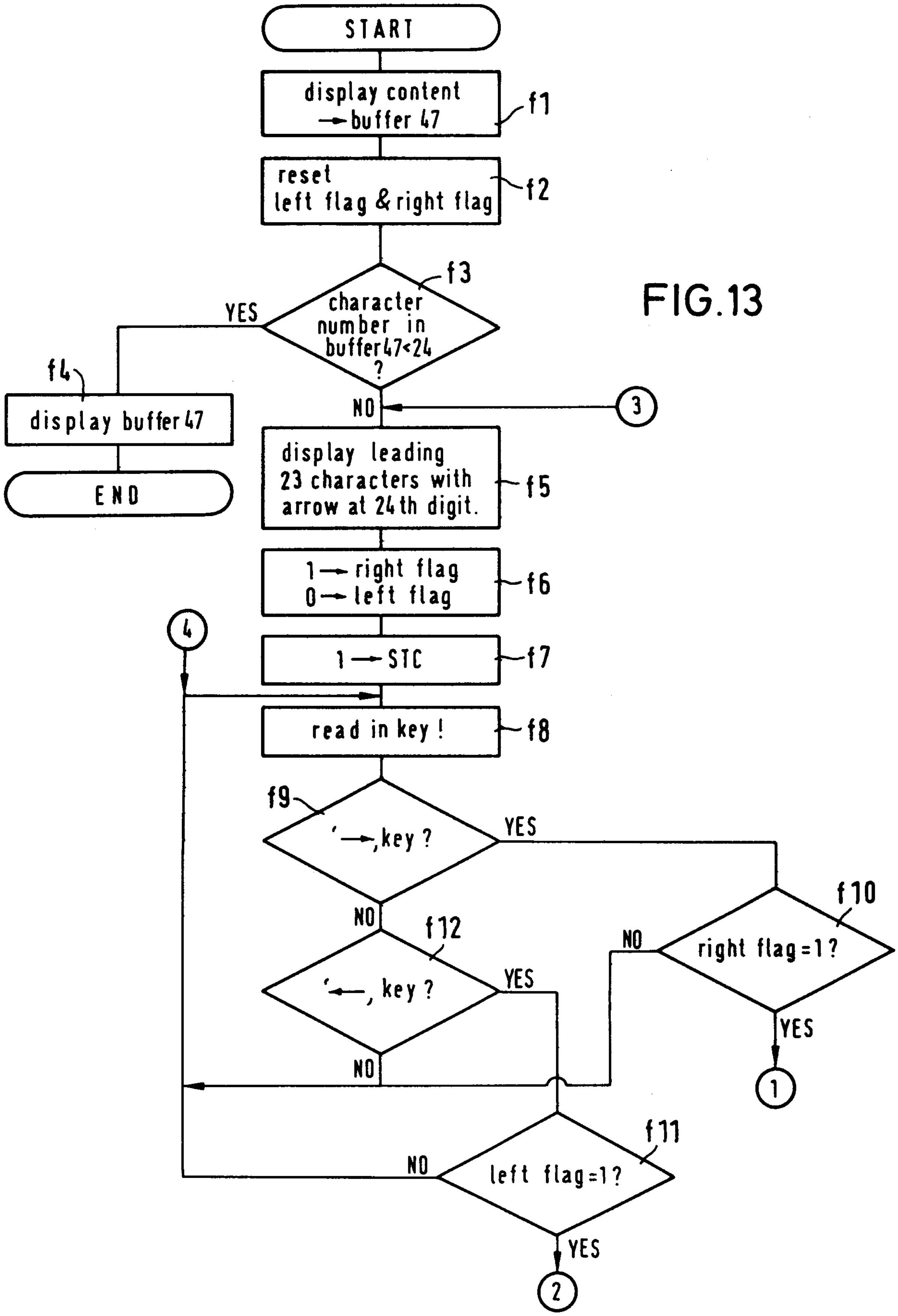
START
display content
→buffer 47
f1
reset
left flag & right flag
f2
f3
character
number in
buffer47<24
?
YES
f4
display buffer 47
END
NO
3
display leading
23 characters with
arrow at 24th digit.
f5
1→right flag
0→left flag
f6
4
1→STC
f7
read in key !
f8
f9
'→' key ?
YES
f10
right flag=1?
NO
YES
1
NO
f12
'←' key ?
YES
NO
f11
left flag=1?
NO
YES
2

FIG.13

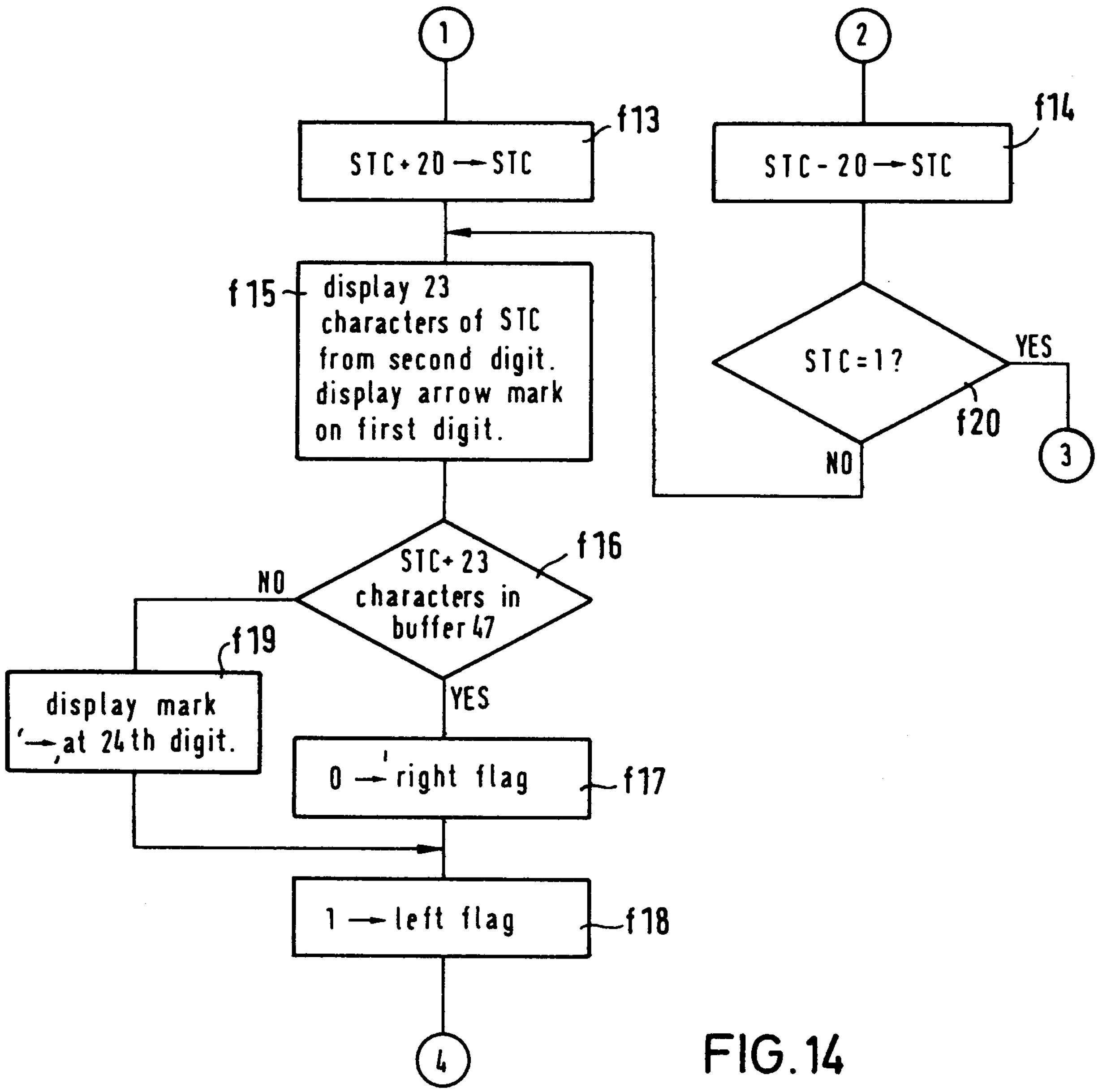
1
2
STC+20→STC
f13
STC-20→STC
f14
f15
display 23 characters of STC from second digit. display arrow mark on first digit.
STC=1?
YES
NO
f20
3
STC+23 characters in buffer 47
f16
NO
YES
f19
display mark '→' at 24th digit.
0 → right flag
f17
1 → left flag
f18
4

FIG.14